# EUROPEAN PATENT APPLICATION

(11) **EP 4 840 682 A2**
(43) Date of publication of application: **18.11.2026**
(21) Application number: 26169119.0
(22) Date of filing: 30.03.2026
(51) Int. Cl.: B60L 53/64, B60L 53/62, B60L 53/65, B60L 53/66, B60L 53/67, B60L 58/12

(54) **VEHICLE, POWER SUPPLY EQUIPMENT, NOTIFICATION SYSTEM, AND NOTIFICATION METHOD**

(30) Priority: 24.04.2025 JP 2025072119
(71) Applicant: Toyota Jidosha Kabushiki Kaisha, Toyota-shi, Aichi-ken 471-8571 (JP)
(72) Inventor: CHIBA, Ryoichi, Toyota-shi, 471-8571 (JP)
(74) Representative: D Young & Co LLP

(57) **Abstract**

A vehicle (10) comprises a power storage device (11) and a controller (50). The vehicle (10) is configured to be capable of electrically charging the power storage device (11) with power supplied from time-based billing power supply equipment (20A). The controller (50) of the vehicle (10) is configured to: calculate a price per unit amount based on (i) equipment information about the power supply equipment (20A) and (ii) information on the power storage device (11), the price per unit amount indicating a charging fee per unit amount of power charged; and notify a user terminal (30, 80) of information about the price per unit amount.

## Description

### CROSS REFERENCE TO RELATED APPLICATIONS

This nonprovisional application is based on Japanese Patent Application No. 2025-072119 filed on April 24, 2025 with the Japan Patent Office, the entire contents of which are hereby incorporated by reference.

### BACKGROUND

### Field

The present disclosure relates to a vehicle, power supply equipment, a notification system, and a notification method.

### Description of the Background Art

Japanese Patent Laying-Open No. 2013-122676 discloses time-based billing power supply equipment (more specifically, a power charging station). The power supply equipment is installed in an hourly charging parking lot. Japanese Patent Laying-Open No. 2013-122676 discloses a controller (more specifically, a payment machine) which calculates a parking fee by time-based billing. Furthermore, when the controller detects that a power storage device mounted in a vehicle is electrically charged by the power supply equipment, the controller switches a (time-based billing) fee system for the parking fee alone to a (time-based billing) fee system for billing a charging fee in addition to the parking fee.

### SUMMARY

For a vehicle comprising a power storage device, the power storage device's rated chargeable power (maximum chargeable power) is often indicated by specification information disclosed to users. However, power supply equipment and/or the vehicle may limit power charged to the power storage device while it is electrically charged. Charging control including such a charging limitation may vary in content depending on the type of the power supply equipment. Charging control by the vehicle may also vary in content depending on the type of the vehicle. Furthermore, the charging control by the power supply equipment and that by the vehicle often have their contents (e.g., a control logic) black-boxed and thus externally invisible. If the charging control should have contents disclosed, it is not always easy for a user to correctly understand the contents of the charging control.

As set forth above, a rate of electrically charging a power storage device can vary with a factor that the user does not know (e.g., the charging limitation described above) whenever the power storage device is electrically charged. Nevertheless, conventionally, there has not been a sufficient study made on a technique of notifying the user of information relevant to the charging rate.

The present disclosure has been made to solve the above problem and contemplates a vehicle, power supply equipment, a notification system, and a notification method capable of appropriately notifying a user of information relevant to a charging rate.

According to a first aspect of the present disclosure, there is provided a vehicle as described below.

(Clause 1) A vehicle comprises a power storage device and a controller. The vehicle is configured to be capable of electrically charging the power storage device with power supplied from time-based billing power supply equipment. The controller is configured to: calculate a price per unit amount based on (i) equipment information about the power supply equipment and (ii) information on the power storage device, the price per unit amount indicating a charging fee per unit amount of power charged; and notify a user terminal of information about the price per unit amount.

Time-based billing power supply equipment has a charging fee determined by a charging time. Users of time-based billing power supply equipment tend to be unconscious of a price per unit amount. However, the price per unit amount increases when a charging limitation or the like is applied and results in a reduced charging rate (i.e., a reduced amount of power charged per unit time). An amount of power charged in some charging indicates an amount of power input to a power storage device by the charging. Furthermore, a price per unit amount in some charging can function as an indicator indicating the economy of the charging. Charging at a lower price per unit amount is evaluated as more economical charging.

Using time-based billing power supply equipment to electrically charge a power storage device may cause a price per unit amount to vary with a charging rate. However, the vehicle that has a function to calculate the price per unit amount can inform the user of information about the price per unit amount. This helps the user in electrically charging the power storage device to be conscious of economy of doing so (or the price per unit amount).

Note that the price per unit amount corresponds to an example of "information (or a parameter) relevant to a charging rate". The higher the charging rate, the lower the price per unit amount.

The vehicle according to clause 1 can have a configuration according to any one of clauses 2 to 6 indicated below.

(Clause 2) The vehicle according to clause 1, wherein the information about the price per unit amount indicates at least one of (i) a factor that increases the price per unit amount and (ii) a method for reducing the price per unit amount.

The present vehicle allows a user to know at least one of (i) a factor that increases the price per unit amount and (ii) a method for reducing the price per unit amount. This helps the user to electrically charge the power storage device significantly economically.

(Clause 3) The vehicle according to clause 1 or 2, wherein the equipment information indicates power output from the power supply equipment and a charging fee of the power supply equipment.

The above configuration helps the vehicle to obtain a charging rate and a price per unit amount, as appropriate. Power output from power supply equipment tends to affect a charging limitation. Specifically, as the power supply equipment outputs larger power, the charging limitation is more likely to be applied. And increasingly limiting power to be charged results in a reduced charging rate. Furthermore, a charging fee affects a price per unit amount. The controller of the vehicle may use an amount of power charged, as detected on the side of the vehicle, and a charging fee obtained from the power supply equipment to calculate a price per unit amount.

(Clause 4) The vehicle according to any one of clauses 1 to 3, wherein the information on the power storage device indicates a state of charge (SOC) and a capacity of the power storage device.

The above configuration helps the vehicle to obtain a charging rate and a price per unit amount, as appropriate. An amount in SOC of the power storage device increasing as the power storage device is electrically charged corresponds to an amount of power charged. The higher an SOC that the power storage device has when electrically charging the power storage device starts, the more easily a charging limitation is applied. Furthermore, the smaller the power storage device is in capacity, the more easily a charging limitation is applied. The controller of the vehicle may use the capacity of the power storage device to determine an amount of power charged to the power storage device or an SOC of the power storage device.

(Clause 5) The vehicle according to any one of clauses 1 to 4, wherein the user terminal is an in-vehicle terminal mounted in the vehicle or a mobile terminal carried by a user of the vehicle.

The above configuration helps the user to early confirm contents that the controller notifies the user terminal of.

(Clause 6) The vehicle according to any one of clauses 1 to 5, wherein the controller is configured to obtain a map based on the equipment information and the information on the power storage device, the map representing a relationship between (i) a first indicator for the power supply equipment, (ii) a second indicator for the power storage device, and (iii) the price per unit amount. The controller is configured to identify, in the map, an actual range indicating the first indicator and the second indicator applied in electrically charging the power storage device, and a target range indicating the first indicator and the second indicator allowing the price per unit amount to be lower than a predetermined value. And in response to the target range failing to include the actual range, the controller is configured to notify the user terminal of at least one of a factor that increases the price per unit amount and a method for reducing the price per unit amount.

The above configuration helps the vehicle to compare and analyze a target range and an actual range to obtain at least one of a factor that increases the price per unit amount and a method for reducing the price per unit amount. This improves notification in accuracy.

According to a second aspect of the present disclosure, power supply equipment described below is provided.

(Clause 7) Time-based billing power supply equipment comprises a controller. The controller is configured to: obtain information on a power storage device mounted in a vehicle from the vehicle; calculate a price per unit amount based on (i) the information on the power storage device and (ii) equipment information about the power supply equipment, the price per unit amount indicating a charging fee per unit amount of power charged; and notify a user terminal of information about the price per unit amount.

The power supply equipment that has a function to calculate a price per unit amount can inform a user of information about the price per unit amount. This helps the user in electrically charging the power storage device to be conscious of economy of doing so (or the price per unit amount).

According to a third aspect of the present disclosure, a notification system described below is provided.

(Clause 8) A notification system comprises a notification device configured to notify a user terminal of a vehicle of first charging information about electrically charging a power storage device mounted in the vehicle. The notification device is configured to: obtain second charging information representing a relationship between a first indicator, a second indicator, and a third indicator; and notify the user terminal of the first charging information based on the second charging information. The first indicator is an indicator about power supply equipment that supplies the power storage device with power. The second indicator is an indicator about the power storage device. The third indicator indicates a parameter relating to a rate of electrically charging the power storage device.

The notification system that comprises a notification device having a function to obtain second charging information representing a relationship between first to third indicators facilitates obtaining a parameter based on second charging information and relevant to a rate of electrically charging the power storage device, and furthermore, facilitates notifying the user terminal of the vehicle of first charging information based on the parameter about electrically charging the power storage device. This helps the user to electrically charge the power storage device at an appropriate rate.

Note that the first indicator may affect a degree (e.g., frequency or intensity) of a charging limitation applied by the power supply equipment, and may be relevant to at least one of a specification of the power supply equipment and a state of the power supply equipment. The second indicator may affect a degree (e.g., frequency or intensity) of a charging limitation applied by the vehicle and may be relevant to at least one of a specification of the power storage device and a state of the power storage device.

(Clause 9) The notification system according to clause 8, wherein the first indicator indicates a rated output of power supply equipment that supplies the power storage device with power to electrically charge the power storage device. The second indicator indicates a state of charge (SOC) that the power storage device has when electrically charging the power storage device starts.

The above configuration helps the notification device to obtain second charging information that defines the third indicator, as appropriate. When the power supply equipment has a larger rated output, a charging limitation is more likely to be applied. Furthermore, when the power storage device has a higher SOC when electrically charging the power storage device starts, a charging limitation is more likely to be applied. And increasingly limiting power to be charged results in a reduced charging rate.

(Clause 10) The notification system according to clause 9, wherein the parameter relating to the rate of electrically charging the power storage device is a first parameter decreasing as the rate of electrically charging the power storage device increases. The notification device is configured to: identify, based on the second charging information, requirements for the first indicator and the second indicator allowing the first parameter to be smaller than a first reference value; and notify the user terminal of the first charging information based on the requirements.

(Clause 11) The notification system according to clause 9, wherein the parameter relating to the rate of electrically charging the power storage device is a second parameter increasing as the rate of electrically charging the power storage device increases. The notification device is configured to: identify, based on the second charging information, requirements for the first indicator and the second indicator allowing the second parameter to be larger than a second reference value; and notify the user terminal of the first charging information based on the requirements.

The notification device according to clauses 10 and 11 can identify requirements for the first indicator and the second indicator allowing a sufficiently high charging rate. Then, the notification device notifies the user terminal of first charging information (information about electrically charging the power storage device) based on the identified requirements. This helps the user to electrically charge the power storage device at an appropriate rate. More specifically, the power supply equipment and/or the vehicle often apply/applies a charging limitation to protect a specific component (e.g., the power storage device). When applying a charging limitation results in a reduced charging rate, there is a possibility that an excessive load is imposed on another component (a charging-related component) in order to protect the specific component. In this regard, the above configuration allows notification to be performed based on requirements for the first indicator and the second indicator allowing a sufficiently high charging rate. Such notification facilitates electrically charging the power storage device under a condition reducing the load imposed on the charging-related component (that is, at a sufficiently high charging rate). This can suppress deterioration and failure of the charging-related component.

The first parameter includes the above-described price per unit amount, by way of example. The second parameter includes a charging rate (an amount of power charged per unit time) by way of example.

(Clause 12) The notification system according to clause 10 or 11, wherein after power supply equipment electrically charges the power storage device, the notification device is configured to update the second charging information using (i) a rated output of the power supply equipment, (ii) an SOC that the power storage device has when electrically charging the power storage device starts, and (iii) an amount of power input to the power storage device as the power storage device is electrically charged. Furthermore, when the power storage device is electrically charged without satisfying at least one of the requirements for the first indicator and the second indicator, the notification device is configured to notify the user terminal of the first charging information indicating the at least one unsatisfied requirement.

The above notification system with a post-charging updating step facilitates obtaining second charging information matching a characteristic of the vehicle and a characteristic of the user of the vehicle. Furthermore, the notification system comprising the step helps the user to electrically charge the power storage device so as to satisfy the requirements for both the first indicator and the second indicator.

(Clause 13) The notification system according to any one of clauses 10 to 12, wherein the notification device is configured to determine whether power supply equipment reserved via the user terminal satisfies the requirements for the first indicator and the second indicator. And when the reserved power supply equipment fails to satisfy at least one of the requirements for the first indicator and the second indicator, the notification device is configured to notify the user terminal to suggest changing the reservation.

The above configuration allows the user to confirm whether the reserved power supply equipment satisfies the requirements for both the first indicator and the second indicator. And the suggestion helps the user to electrically charge the power storage device while satisfying the requirements for both the first indicator and the second indicator.

(Clause 14) The notification system according to any one of clauses 10 to 13, further comprises the user terminal. The user terminal is configured to display on a map, based on the first charging information of which the user terminal is notified, the one or more units of power supply equipment satisfying the requirement for the first indicator as being distinguished from the power supply equipment failing to satisfy the requirement for the first indicator.

The above configuration helps the user to distinguish power supply equipment satisfying the requirement for the first indicator from power supply equipment failing to satisfy the requirement for the first indicator.

According to a fourth aspect of the present disclosure, a notification method is provided as follows.

(Clause 15) A method for notifying a user terminal for a power storage device comprises a first step and a second step, as follows. In the first step, a computing device calculates a price per unit amount using (i) information about time-based billing power supply equipment and (ii) information about the power storage device charged with power supplied from the power supply equipment, the price per unit amount indicating a charging fee per unit amount of power charged. In the second step, the computing device notifies the user terminal of information about the price per unit amount.

The above method can also notify a user of information about a price per unit amount. This helps the user in electrically charging the power storage device to be conscious of economy of doing so (or the price per unit amount).

Note that the computing device may be a stationary computing device, a computing device mounted in a movable object (an automobile, a railroad vehicle, a ship, an airplane, a drone, a robot, etc.) comprising the power storage device, a computing device incorporated in a mobile terminal, or a computing device in the cloud.

The foregoing and other objects, features, aspects and advantages of the present disclosure will become apparent from the following detailed description of the present disclosure when taken in conjunction with the accompanying drawings.

### BRIEF DESCRIPTION OF THE DRAWINGS

Fig. 1 shows a configuration of a power supply system according to an embodiment of the present disclosure.
Fig. 2 shows a configuration of a vehicle shown in Fig. 1.
Fig. 3 is a functional block diagram of a controller of a notification system according to the present embodiment.
Fig. 4 is a flowchart of a first notification method according to the present embodiment.
Fig. 5 is a diagram for illustrating charging control for each charging condition.
Fig. 6 shows a first example of a map of prices per unit amount of power charged.
Fig. 7 shows a second example of the map of prices per unit amount of power charged.
Fig. 8 shows an exemplary variation of the Fig. 6 map of prices per unit amount of power charged.
Fig. 9 shows an exemplary variation of the Fig. 7 map of prices per unit amount of power charged.
Fig. 10 shows an example of an actual range and a target range in the map shown in Fig. 8.
Fig. 11 shows an example of an actual range and a target range in the map shown in Fig. 9.
Fig. 12 shows an example of a screen displayed in response to first notification indicated in Fig. 4.
Fig. 13 shows a first screen displayed in response to second notification indicated in Fig. 4.
Fig. 14 shows a screen displayed in response to an operation performed on the screen shown in Fig. 13.
Fig. 15 shows a second screen displayed in response to the second notification indicated in Fig. 4.
Fig. 16 is a flowchart of a second notification method according to the present embodiment.
Fig. 17 shows an example of a screen displayed in response to notification indicated in Fig. 16.
Fig. 18 shows a first example of a charging rate map.
Fig. 19 shows an example of an actual range and a target range in the map shown in Fig. 18.
Fig. 20 shows a second example of the charging rate map.
Fig. 21 shows an example of an actual range and a target range in the map shown in Fig. 20.
Fig. 22 shows power supply equipment according to an exemplary variation.
Fig. 23 is a flowchart of charging control according to an exemplary variation.
Fig. 24 is a flowchart of a notification method according to an exemplary variation.
Fig. 25 illustrates a cloud server having a function shown in Fig. 3 for notification.
Fig. 26 illustrates a server having a function shown in Fig. 22 for notification.

### DESCRIPTION OF THE PREFERRED EMBODIMENTS

Embodiments of the present disclosure will now be described in detail with reference to the drawings. In the drawings, identical or equivalent components are identically denoted and will not be described repeatedly.

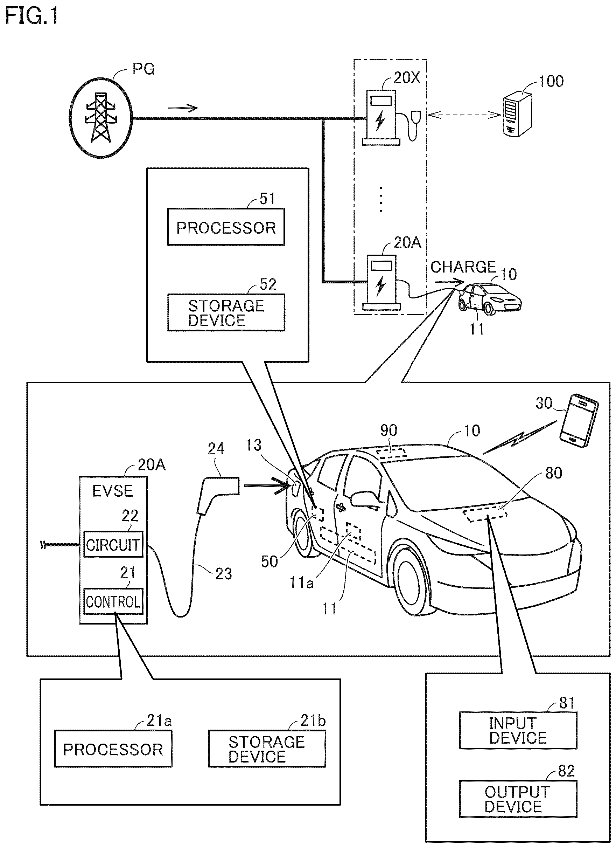

Fig. 1 schematically shows a configuration of a power supply system and a vehicle according to an embodiment of the present disclosure. Referring to Fig. 1, the power supply system according to the present embodiment comprises a power system PG, a plurality of EVSEs (including EVSEs 20A and 20X) connected to power system PG, and a server 100 that manages the EVSEs. EVSE means electric vehicle supply equipment.

Power system PG is a power grid constructed by power transmission and distribution facilities. A plurality of power plants (not shown) are connected to power system PG. Power system PG receives power supplied from the power plants. In the present embodiment, power system PG supplies alternating-current (AC) power (e.g., single-phase or three-phase AC power). The plurality of EVSEs that the power supply system comprises are each configured to receive AC power supplied from power system PG and output direct-current (DC) power.

A vehicle 10 is configured to be capable of using each of the plurality of EVSEs that the power supply system comprises. For example, EVSE 20A is a charging station comprising a control unit 21, a circuit unit 22, and a charging cable 23. Control unit 21 includes a processor 21a and a storage device 21b. Circuit unit 22 includes a switch circuit and a power conversion circuit (e.g., an inverter) (not shown). Charging cable 23 has an end with a connector 24 (a plug) and internally includes a communication line and a power line. A single electric wire may serve as both the communication line and the power line.

Vehicle 10 comprises an inlet 13 to which connector 24 is detachably attachable. When vehicle 10 is parked, and connector 24 is connected to inlet 13 of vehicle 10 parked, EVSE 20A and vehicle 10 are electrically interconnected via charging cable 23. Circuit unit 22 of EVSE 20A is controlled by control unit 21. While EVSE 20A supplies power to vehicle 10, control unit 21 connects the switch circuit and converts AC power that is supplied from power system PG to circuit unit 22 to DC power by the power conversion circuit. The DC power is output to charging cable 23 and input to inlet 13 of vehicle 10. Although Fig. 1 simply shows inlet 13 for DC charging, vehicle 10 may further comprise an inlet for AC charging, and a charger (a power conversion circuit). The inlet (a charging port) may be provided at any position as desired. The inlet may be provided on any of the front, rear, right, left, upper, and lower surfaces of the vehicular body.

Vehicle 10 further comprises an ECU 50. The ECU means an electronic control unit. ECU 50 comprises a processor 51 and a storage device 52. Storage device 52 is configured to be capable of storing stored information. In the present embodiment, processor 51 executes a program stored in storage device 52 to execute a variety of types of control in ECU 50 (e.g., control electrically charging and discharging a battery 11). Storage device 52 has the above program, and in addition, specification information (e.g., a capacity) of battery 11 stored in advance.

Vehicle 10 further comprises an HMI (human machine interface) 80. HMI 80 includes an input device 81 and an output device 82. Input device 81 receives an input (e.g., an operation on an operation section, or a voice input) from a user. Input device 81 outputs to ECU 50 a signal corresponding to the input received from the user. Input device 81 may further include a recognition device that recognizes a state of the user. The recognition device may include a camera to obtain an image inside a cabin of the vehicle. When the recognition device recognizes a predetermined gesture (e.g., a hand gesture such as a V sign) made by the user, a signal corresponding to the recognized gesture may be output from HMI 80 to ECU 50. The recognition device enables the user to operate an in-vehicle device simply by sending a signal. Output device 82 operates in response to an instruction received from ECU 50 to output information to the user (or notifies the user of information) visibly or audibly (including sound). Output device 82 may include a display device and a speaker. Examples of the display device include a center display, a meter panel, and a head-up display. The display device and the speaker may change in orientation in response to an instruction received from ECU 50. HMI 80 may include a touch panel display. The touch panel display serves as both input device 81 and output device 82.

A mobile terminal 30 is configured to be capable of wirelessly communicating with ECU 50. Mobile terminal 30 is carried by a user of vehicle 10. In the present embodiment, mobile terminal 30 is a smartphone equipped with a touch panel display. The smartphone has a computer, a camera, a microphone, and a speaker incorporated therein. Mobile terminal 30 has predetermined application software (hereinafter also simply referred to as "app") installed therein. Mobile terminal 30 communicates information with vehicle 10 through the application. Mobile terminal 30 is not limited to a smartphone. For example, mobile terminal 30 can be a laptop, a tablet terminal, a wearable device (such as a smart watch, smart glasses, or smart clothing), or an electronic key as well.

HMI 80 (an in-vehicle terminal) and mobile terminal 30 (a mobile terminal) each function as a user terminal for vehicle 10. Furthermore, ECU 50 of vehicle 10 is configured to be capable of communicating with control unit 21 of EVSE 20A. ECU 50 may communicate with control unit 21 through charging cable 23. ECU 50 may communicate with control unit 21 wirelessly. Mobile terminal 30 is also configured to be capable of communicating with EVSE 20A (or control unit 21). Mobile terminal 30 may communicate with EVSE 20A via server 100 that manages EVSE 20A. EVSE 20A may be public EVSE. Examples of the public EVSE include EVSEs installed in commercial facilities, automobile dealers, or highway parking areas.

In the above description has been described an example of a configuration of EVSE that the power supply system according to the present embodiment comprises. The power supply system comprises any number of EVSEs, and may comprise two or more and less than 50 EVSEs, 50 or more and less than 300 EVSEs, or 300 or more EVSEs. The power supply system according to the present embodiment comprises a plurality of EVSEs having different rated outputs. Specifically, for these EVSEs' rated outputs, "20 kW" is the smallest rated output and "90 kW" is the largest rated output. Each EVSE that the power supply system comprises is time-based billing power supply equipment. Therefore, each EVSE imposes a charging fee corresponding to a charging time on a user of a vehicle who uses the power supply equipment of interest.

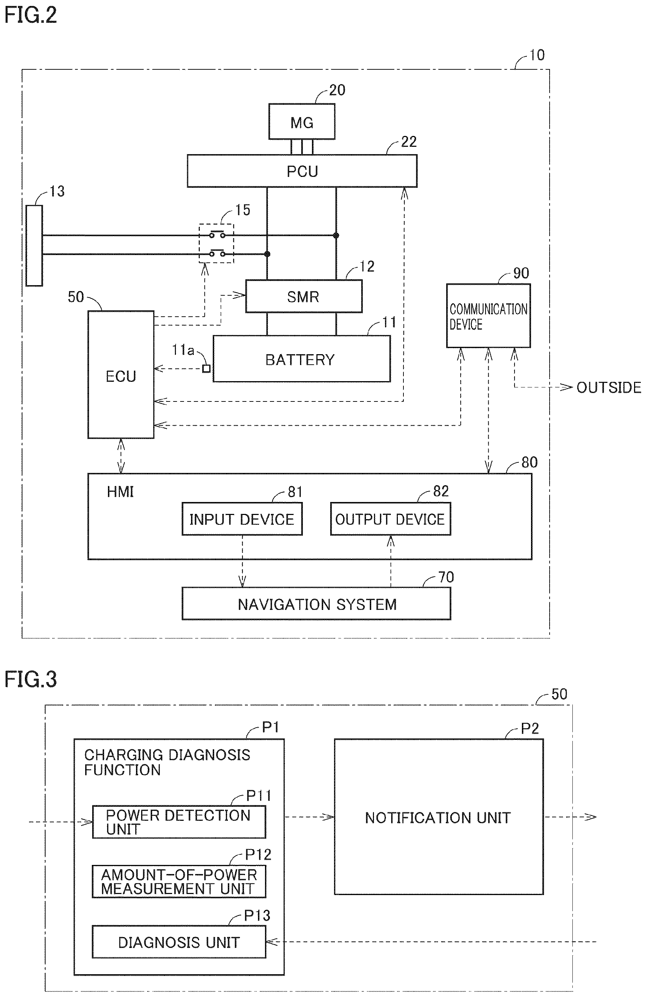

Fig. 2 shows a configuration of vehicle 10. As shown in Fig. 2, vehicle 10 further comprises a navigation system (hereinafter also referred to as "NAVI") 70 and a communication device 90. Communication device 90 includes a variety of types of communication I/Fs (interfaces). ECU 50 and NAVI 70 communicate with a device external to vehicle 10 via communication device 90. Communication device 90 may include a communication I/F to perform wired communication with EVSE connected to vehicle 10. Furthermore, communication device 90 may include a radio communication device such as a DCM (a data communication module). In the present embodiment, input device 81 and output device 82 mounted in vehicle 10 function as an input device and an output device, respectively, for NAVI 70. Mobile terminal 30 shown in Fig. 1 can also function as an input device and an output device for NAVI 70 by performing wireless communication with NAVI 70 via communication device 90.

NAVI 70 has a computer incorporated therein. NAVI 70 further comprises a storage device to store map information. NAVI 70 employs a positioning system such as a GPS (a global positioning system) to consecutively detect the position of vehicle 10, and consecutively outputs the detected position to an output device (e.g., output device 82 or mobile terminal 30). The output device displays the position of vehicle 10 on a map in real time. NAVI 70 refers to the map information to conduct a search for finding an optimal route (e.g., the shortest route) from the current position of vehicle 10 to a destination or finding power supply equipment satisfying a predetermined condition, and outputs a search result to the output device. The output device outputs the search result visibly or audibly. NAVI 70 may update the map information over the air (OTA).

Vehicle 10 further comprises battery 11, an SMR (system main relay) 12, a charging relay 15, an MG (motor generator) 20, and a PCU (power control unit) 22. Vehicle 10 is configured to be capable of travelling with power stored in battery 11. Battery 11 can be a known vehicular power storage device. Examples of the known vehicular power storage devices include a flooded secondary battery, an all solid state secondary battery, and a battery pack. Examples of a vehicular secondary battery include a lithium ion battery and a nickel metal hydride battery. Vehicle 10 is for example a battery electric vehicle (BEV) without comprising an internal combustion engine. This is not exclusive, however, and vehicle 10 may be a plug-in hybrid electric vehicle (PHEV) comprising an internal combustion engine or may be another electrically driven vehicle (xEV).

Vehicle 10 further comprises a monitoring module 11a to monitor the state of battery 11. Monitoring module 11a includes a variety of types of sensors (e.g., a voltage sensor, a current sensor, and a temperature sensor) that sense a state of battery 11, and outputs a result of sensing to ECU 50.

Vehicle 10 is configured to be capable of external charging. The external charging is electrically charging an in-vehicle power storage device (e.g., battery 11) with power external to the vehicle. Charging relay 15 switches connection/disconnection of an electrical path extending from inlet 13 to battery 11. SMR 12 switches connection/disconnection of an electrical path extending from battery 11 to PCU 22. While the battery is externally charged, charging relay 15 and SMR 12 are each closed (or connected). When the battery is not externally charged, charging relay 15 is open (or disconnected). SMR 12 and charging relay 15 are controlled by ECU 50. When the battery is externally charged, for example, EVSE 20A shown in Fig. 1 outputs DC power which is in turn input to inlet 13, and furthermore, passes through charging relay 15 and SMR 12 and is input to battery 11. In the present embodiment, a charging line including inlet 13 and charging relay 15 is connected between SMR 12 and PCU 22. This is not exclusive, however, and a charging line may be connected between battery 11 and SMR 12.

SMR 12 is also closed while vehicle 10 is traveling. PCU 22 uses power supplied from battery 11 to drive MG 20. MG 20 functions as a traveling motor. PCU 22 for example includes an inverter and is controlled by ECU 50. MG 20 is driven by PCU 22 to rotate a driving wheel of vehicle 10. MG 20 performs regenerative power generation and outputs generated power to battery 11. Vehicle 10 may comprise any number of traveling motors. The traveling motor may be an in-wheel motor.

Fig. 3 is a functional block diagram of ECU 50. As shown in Fig. 3, ECU 50 includes a unit P1 for a charging diagnosis function, and a notification unit P2. Unit P1 obtains information about power supply equipment (hereinafter referred to as "equipment information") and information about battery 11 (hereinafter referred to as "battery information"). Specifically, unit P1 includes a power detection unit P11, an amount-of-power measurement unit P12, and a diagnosis unit P13. Power detection unit P11, amount-of-power measurement unit P12, diagnosis unit P13, and notification unit P2 may each be embodied by processor 51 and a program stored in storage device 52, or may be embodied by dedicated hardware (e.g., electronic circuitry).

Power detection unit P11 obtains battery information indicating a state (e.g., a current and a voltage) of battery 11 from monitoring module 11a. And power detection unit P11 obtains power input/output to/from battery 11 based on the current and voltage of battery 11. While battery 11 is electrically charged, power detection unit P11 consecutively obtains power charged (or input) to battery 11. Power input/output to/from battery 11 corresponds to an example of the battery information.

Amount-of-power measurement unit P12 obtains an amount of power input/output to/from battery 11 for a predetermined period of time based on the power input/output to/from battery 11 as obtained by power detection unit P11. Furthermore, amount-of-power measurement unit P12 obtains the capacity of battery 11 from storage device 52 and obtains a state of charge (SOC) based on the capacity of battery 11 and the amount of power input/output to/from the battery. A power storage device (e.g., battery 11) has a capacity, which indicates an amount of power that the power storage device can store, and specifically corresponds to an amount of power stored in the power storage device when the power storage device is fully charged. An SOC indicates a ratio of power charged. The ratio of power charged for example represents a ratio of an amount of currently stored power to an amount of power stored in a fully charged state in a range of 0 to 100%. An amount of power input/output to/from battery 11 and the battery's capacity and SOC correspond to one example of the battery information.

Amount-of-power measurement unit P12 for example accumulates power input (or charged) to battery 11 to obtain an amount of power charged to battery 11. The amount of power charged to battery 11 is equivalent to an amount of power input to battery 11 for a period of time from when electrically charging the battery starts to when doing so ends. Furthermore, amount-of-power measurement unit P12 obtains the SOC of battery 11 when electrically charging battery 11 starts. Amount-of-power measurement unit P12 also consecutively obtains the SOC of battery 11 while the battery is electrically charged.

Diagnosis unit P13 obtains the battery information (e.g., an amount of power charged to battery 11 and the battery's SOC) from amount-of-power measurement unit P12. Furthermore, diagnosis unit P13 reads the specification information of battery 11 from storage device 52. The specification information of battery 11 also corresponds to an example of the battery information.

Diagnosis unit P13 obtains specification information (e.g., a rated output) of EVSE and fee information (e.g., a unit price to be billed) of the EVSE. According to the present embodiment, diagnosis unit P13 receives specification information and fee information of EVSE (e.g., EVSE 20A shown in Fig. 1) through communication device 90 while the EVSE is connected to vehicle 10. This is not exclusive, however, and diagnosis unit P13 may receive the EVSE's specification information and fee information from server 100 that manages the EVSE through communication device 90. EVSE's rated output indicates a maximum power that the EVSE can output, and specifically corresponds to a maximum output power of the EVSE in design. EVSE's specification information and fee information each correspond to an example of the equipment information.

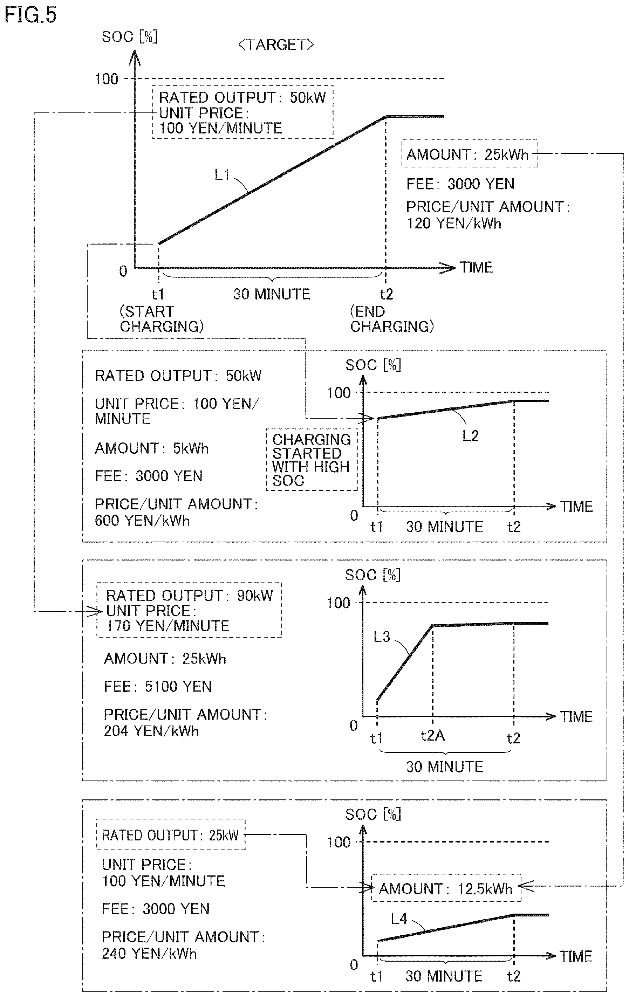

Diagnosis unit P13 uses the equipment information and the battery information to calculate a price per unit amount of power charged, and requests notification unit P2 to provide notification of information about the calculated price per unit amount of power charged. The price per unit amount of power charged indicates a charging fee per unit amount of power charged. The charging fee may be represented by a general currency (a legal currency) or may be represented by a virtual currency. Furthermore, the charging fee may be represented by a number of points that can be exchanged with a predetermined product or service. In the present embodiment, the charging fee is represented by Japan's legal currency (Yen) by way of example (see Fig. 5 described later).

For example, diagnosis unit P13 determines whether a price per unit amount of power charged is higher than a reference value, and the diagnosis unit requests notification unit P2 to issue notification of a result of the determination. Furthermore, when diagnosis unit P13 determines that the price per unit amount of power charged is higher than the reference value, diagnosis unit P13 uses the equipment information and the battery information to identify a factor that increases the price per unit amount of power charged and a method for reducing the price per unit amount of power charged, and the diagnosis unit requests notification unit P2 to issue notification of the identified factor and method.

Notification unit P2 notifies a user terminal (e.g., at least one of HMI 80 and mobile terminal 30) of the notification requested by diagnosis unit P13.

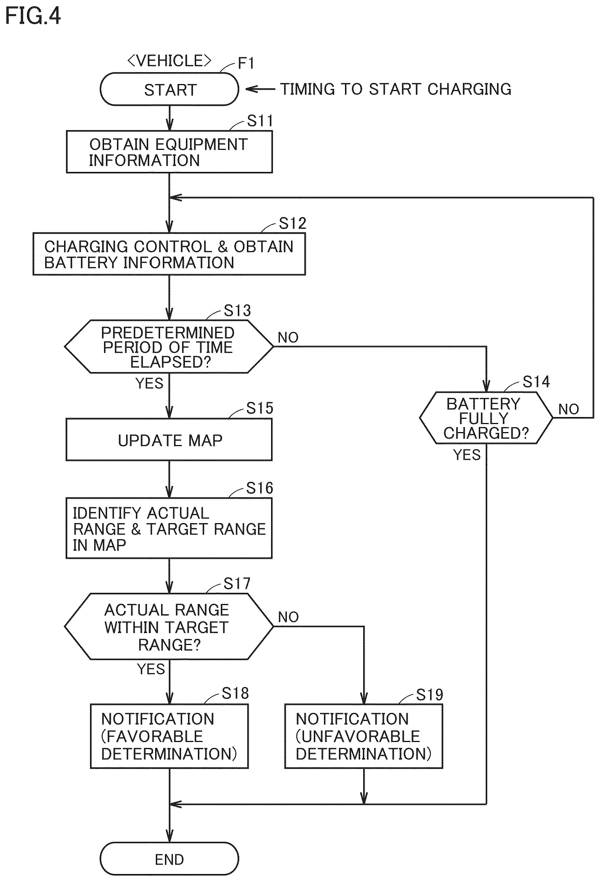

Fig. 4 is a flowchart of a first notification method according to the present embodiment. For example, ECU 50 executes a processing flow F1 at a timing when externally charging battery 11 starts. ECU 50 may start the processing flow F1 when notification that externally charging the battery starts is received from EVSE connected to vehicle 10. In the flowchart, "S" means a step.

In the processing flow F1, ECU 50 in S11 obtains from the equipment of interest the specification information (including a rated output) and fee information (including a unit price to be billed) of the equipment of interest for example through wired communication. The equipment of interest is EVSE connected to vehicle 10. The equipment of interest may transmit the specification information and fee information of the equipment of interest to ECU 50 in response to a request received from ECU 50.

Subsequently, in S12, ECU 50 applies control to electrically charging battery 11 while the ECU obtains and stores battery information about battery 11. Specifically, ECU 50 obtains battery information indicating a state of battery 11 based on an output from monitoring module 11a. The battery information for example indicates power charged, an amount of power input, and an SOC. The power charged is obtained by power detection unit P11. The amount of power input and the SOC are obtained by amount-of-power measurement unit P12.

ECU 50 cooperates with a controller of the EVSE to apply control to electrically charging battery 11. For example, when the equipment of interest is EVSE 20A shown in Fig. 1, ECU 50 calculates a target value for a current or power for battery 11 (hereinafter referred to as a "target charging value"), and transmits the target charging value to control unit 21. In this way, ECU 50 requests control unit 21 for charging in accordance with the target charging value. Control unit 21 controls circuit unit 22 based on the target charging value received from ECU 50. Control unit 21 adjusts by circuit unit 22 power supplied from EVSE 20A to inlet 13 (and hence battery 11).

When ECU 50 does not limit power charged, ECU 50 sets a target charging value so that battery 11 is charged with power equal to the rated output of the equipment of interest (or EVSE 20A). When ECU 50 limits power charged, ECU 50 sets a target charging value so that battery 11 is charged with power smaller than the rated output of the equipment of interest. ECU 50 may limit power charged, for example in order to suppress deterioration of battery 11. ECU 50 may limit power charged, based on the SOC of battery 11, in order to suppress overcharging battery 11. In contrast, when in EVSE 20A control unit 21 does not limit power charged, control unit 21 controls circuit unit 22 so that the current or power of battery 11 approaches the target charging value. When control unit 21 limits power charged, control unit 21 limits the current or power of battery 11 by circuit unit 22 to a value smaller than the target charging value. Control unit 21 may limit power charged, for example in order to suppress overheating a device in EVSE 20A.

Subsequently, in S13, ECU 50 determines whether a predetermined period of time (for example of 30 minutes) has elapsed since electrically charging battery 11 started. When the predetermined period of time has not elapsed since electrically charging battery 11 started (NO in S13), ECU 50 proceeds to S14 to determine whether battery 11 is fully charged. ECU 50 determines that battery 11 is fully charged when battery 11 attains an SOC of 100%. In response to NO in both S13 and S14, S12 to S14 are repeated. By S12, battery 11 is electrically charged, and a state of battery 11 while it is electrically charged (e.g., power charged to the battery, an amount of power input to the battery, and the battery's SOC) is also stored in storage device 52.

Electrically charging battery 11 starts, and thereafter when the battery is fully charged before the predetermined period of time elapses (YES in S14), the processing flow F1 ends. In contrast, electrically charging battery 11 starts, and thereafter when the predetermined period of time elapses while battery 11 is not fully charged, the control determines YES in S13 and proceeds to S15. This ends electrically charging battery 11. The YES in S13 means that battery 11 is electrically charged for the predetermined period of time continuously.

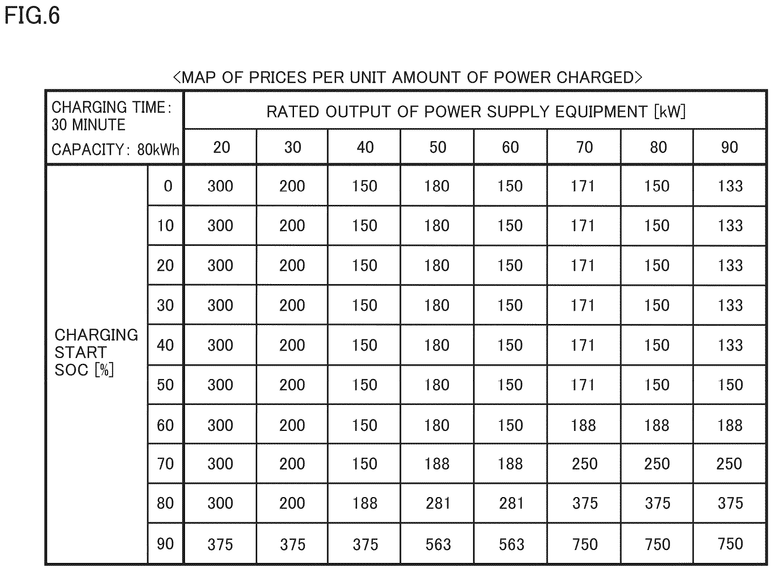

In S15, ECU 50 uses the equipment information obtained in S11 and the battery information obtained in S12 to update a map of prices per unit amount of power charged. The map of prices per unit amount of power charged is information indicating a relationship between a first indicator for power supply equipment, a second indicator for battery 11, and a price per unit amount of power charged (a third indicator). In the present embodiment, the first indicator indicates a rated output of EVSE (time-based billing power supply equipment) that the power supply system comprises described above. The second indicator indicates an SOC that battery 11 has when electrically charging the battery starts. In Figs. 6 to 11, the SOC when electrically charging the battery starts is indicated as a "charging start SOC".

Subsequently, in S16, ECU 50 identifies an actual range and a target range in the map of prices per unit amount of power charged. In the present embodiment, the actual range indicates a first indicator and a second indicator in electrically charging the battery in S12. The target range indicates a first indicator and a second indicator allowing a lower price per unit amount of power charged than a predetermined value (hereinafter referred to as a "reference price per unit amount of power charged ").

Subsequently, in S17, ECU 50 compares the actual and target ranges identified in S16 to determine whether the target range includes the actual range.

Hereinafter, S15 to S17 will be described with reference to Figs. 5 to 11.

Fig. 5 is a diagram for illustrating charging control for each charging condition. In Fig. 5, t1 and t2 indicate a timing to start charging and a timing to end charging, respectively. The equipment of interest starts and ends externally charging battery 11 at t1 and t2, respectively. In Fig. 5, "UNIT PRICE" represents a unit price to be billed, "FEE" represents a charging fee, "AMOUNT" represents an amount of power charged, and "PRICE/UNIT AMOUNT" represents a price per unit amount of power charged.

A line L1 represents how battery 11 transitions in SOC when the battery is electrically charged under a first charging condition. Under the first charging condition, the equipment of interest has a rated output of "50 kW", the battery has an SOC of "15%" when electrically charging the battery starts, and the battery is electrically charged for a period of time of "30 minutes". The equipment of interest has a unit price of "100 yen/minute" (a time-based unit price) to be billed, and a charging fee of "3,000 yen" for 30 minutes. The line L1 indicates "25 kWh" as an amount of power charged and hence a charging rate (an amount of power charged per hour) of "25 kW". Therefore, the price per unit amount of power charged is "120 yen/kWh" (= 3,000 yen/25 kWh).

A line L2 represents how battery 11 transitions in SOC when the battery is electrically charged under a second charging condition. The second charging condition is the same as the first charging condition except that the battery has an SOC of "75%", rather than "15%", when electrically charging the battery starts. The line L2 indicates "5 kWh" as an amount of power charged. Therefore, the price per unit amount of power charged is "600 yen/kWh" (= 3,000 yen/5 kWh).

A line L3 represents how battery 11 transitions in SOC when the battery is electrically charged under a third charging condition. The third charging condition is the same as the first charging condition except that the equipment of interest has a rated output of "90 kW" and a unit price of "170 yen/minute" to be billed (a time-based unit price). A high unit price to be billed tends to be set for high-spec power supply equipment (e.g., high-power power supply equipment). In Fig. 5, t2A indicates a timing to apply a charging limitation. The line L3 indicates "25 kWh" as an amount of power charged. A charging fee for 30 minutes is "5,100 yen". Therefore, the price per unit amount of power charged is "204 yen/kWh" (= 5,100 yen/25 kWh).

A line L4 represents how battery 11 transitions in SOC when the battery is electrically charged under a fourth charging condition. The fourth charging condition is the same as the first charging condition except that the equipment of interest has a rated output of "25 kW". The line L4 indicates "12.5 kWh" as an amount of power charged. Therefore, the price per unit amount of power charged is "240 yen/kWh" (= 3,000 yen/12.5 kWh).

The reference price per unit amount of power charged may be 175 yen/kWh. In that case, of the first to fourth charging conditions, the first charging condition is the only condition allowing a lower price per unit amount of power charged than the reference price per unit amount of power charged. Note, however, the reference price per unit amount of power charged can be changed as appropriate.

A rate of electrically charging battery 11 may vary depending on the specification of battery 11. For example, as battery 11 is smaller in capacity, a charging limitation is more likely to be applied, and battery 11 is more likely to be electrically charged at a lower rate. Initially (for example when vehicle 10 is shipped) a map of prices per unit amount of power charged that matches the capacity of battery 11 is stored in storage device 52. Thereafter, when vehicle 10 has battery 11 replaced, the map of prices per unit amount of power charged is also updated in accordance with the replacement battery (or power storage device).

Fig. 6 shows a first example of a map of prices per unit amount of power charged. When battery 11 has a capacity of "80 kWh", a map of prices per unit amount of power charged for example as shown in Fig. 6 may be stored in storage device 52. The map of prices per unit amount of power charged as shown in Fig. 6 is a matrix map having a plurality of regions divided into a grid. The map of prices per unit amount of power charged has each region identified by a column representing a first indicator (power supply equipment's rated output) and a row representing a second indicator (an SOC that the battery has when electrically charging the battery starts).

The columns represent power supply equipment's rated output in the form of eight segments (or regions) dividing a region of 20 kW to 100 kW by a unit of 10 kW. Specifically, it is divided into a segment of 20 kW or more and less than 30 kW (column: 20), a segment of 30 kW or more and less than 40 kW (column: 30), ..., and a segment of 90 kW or more and less than 100 kW (column: 90). The rows represent the SOC that the battery has when electrically charging the battery starts by 10 segments (or regions) dividing a region of 0% to 100% by a unit of 10%. Specifically, it is divided into a segment of 0% or more and less than 10% (row: 0), a segment of 10% or more and less than 20% (row: 10), ..., and a segment of 90% or more and less than 100% (row: 90).

Each region included in the map of prices per unit amount of power charged is identified by the rows and columns as described above. For example, a region of "row, column: 30, 60" means a segment (or region) indicating that the battery has an SOC of 30% or more and less than 40% when electrically charging the battery by power supply equipment starts and that the power supply equipment has a rated output of 60 kW or more and less than 70 kW.

In each region of the map of prices per unit amount of power charged is set a price per unit amount of power charged to battery 11 when battery 11 is electrically charged by power supply equipment having a rated output corresponding to the region and has an SOC that corresponds to the region when electrically charging the battery starts, and electrically charging the battery ends 30 minutes after electrically charging the battery starts. Initially (for example when the vehicle is shipped), a map of prices per unit amount of power charged has set in each region a price per unit amount of power charged, as obtained in advance through an experiment or a simulation.

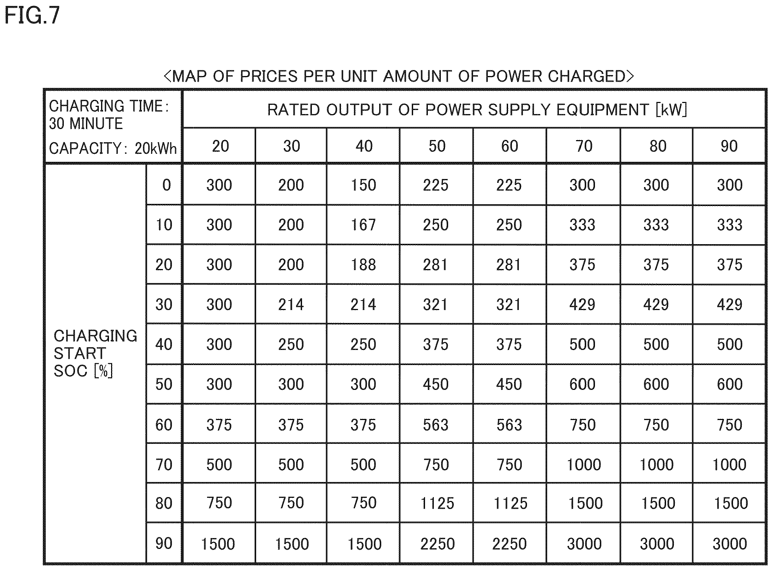

Fig. 7 shows a second example of the map of prices per unit amount of power charged. When battery 11 has a capacity of "20 kWh", a map of prices per unit amount of power charged for example as shown in Fig. 7 may be stored in storage device 52. The Fig. 7 map of prices per unit amount of power charged is also a matrix map similar to the Fig. 6 map of prices per unit amount of power charged. Note, however, that the Fig. 7 map of prices per unit amount of power charged has set in each region a different price per unit amount of power charged than the Fig. 6 map of prices per unit amount of power charged does. The Fig. 6 map of prices per unit amount of power charged has set in each region a price per unit amount of power charged that is determined for a power storage device (e.g., battery 11) having a capacity of 80 kWh. In contrast, the Fig. 7 map of prices per unit amount of power charged has set in each region a price per unit amount of power charged that is determined for a power storage device (e.g., battery 11) having a capacity of 20 kWh.

The Figs. 6 and 7 maps of prices per unit amount of power charged indicate in each region a price per unit amount of power charged by a unit of [yen/kWh]. This is not exclusive, however, and the lowest price per unit amount of power charged may be represented by "1", and its region's price per unit amount of power charged may serve as a reference and other regions' prices per unit amount of power charged may be represented according to the reference.

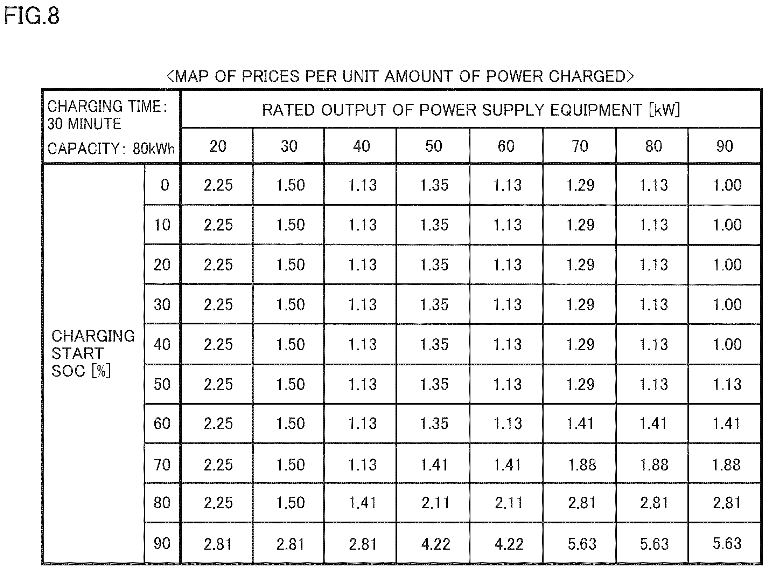

Fig. 8 shows an exemplary variation of the Fig. 6 map of prices per unit amount of power charged. In the Fig. 8 map of prices per unit amount of power charged, regions of "row, column: 0, 90", "row, column: 10, 90", "row, column: 20, 90", "row, column: 30, 90", and "row, column: 40, 90" each indicate the lowest price per unit amount of power charged. And, for example, a region of "row, column: 0, 20" indicates a price per unit amount of power charged that is "2.25" times the lowest price per unit amount of power charged.

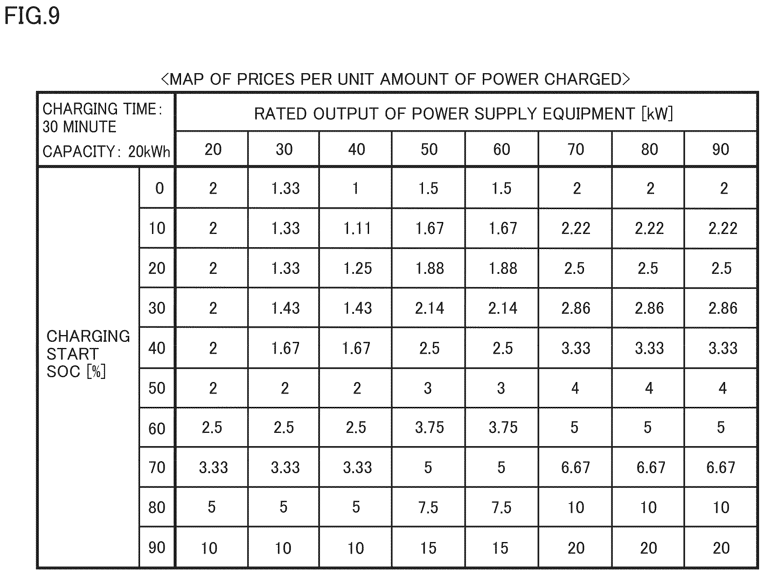

Fig. 9 shows an exemplary variation of the Fig. 7 map of prices per unit amount of power charged. In the Fig. 9 map of prices per unit amount of power charged, a region of "row, column: 0, 40" indicates the lowest price per unit amount of power charged. And, for example, a region of "row, column: 0, 20" indicates a price per unit amount of power charged that is "2" times the lowest price per unit amount of power charged.

While the Figs. 6 to 9 maps of prices per unit amount of power charged indicate power supply equipment's rated output in a range (of 20 kW to 100 kW) and a number of segments (8 segments), the range and the number of segments can be changed as appropriate. Furthermore, while each map indicates an SOC that the battery has when electrically charging the battery starts in a number of segments (10 segments), the number of segments can also be changed as appropriate.

S15 in Fig. 4 can update a value of each region of the map of prices per unit amount of power charged. When electrically charging battery 11 by power supply equipment is performed for 30 minutes, ECU 50 may identify a region (an actual range) corresponding to the electrically charging the battery as performed, based on the rated output of the equipment of interest used to electrically charge the battery and the SOC that the battery has when electrically charging the battery starts, and the ECU may update the identified region's price per unit amount of power charged. ECU 50 may calculate a price per unit amount of power charged to the battery, and replace in the map of prices per unit amount of power charged the identified region's price per unit amount of power charged with the calculated price per unit amount of power charged. Alternatively, ECU 50 may set a value (e.g., an average value) between a price per unit amount of power charged that is indicated in a region corresponding to the electrically charging the battery as performed (a value before updating) and a price per unit amount of power charged to the battery as a price per unit amount of power charged for the region corresponding to the electrically charging the battery as performed (a value after updating). Note that updating a map corresponds to an example of "obtaining a map". Updating a map provides an updated map.

In the processing flow F1 shown in Fig. 4, ECU 50 in S16 identifies an actual range and a target range in the map of prices per unit amount of power charged. Subsequently, in S17, ECU 50 determines whether the actual range is included in the target range.

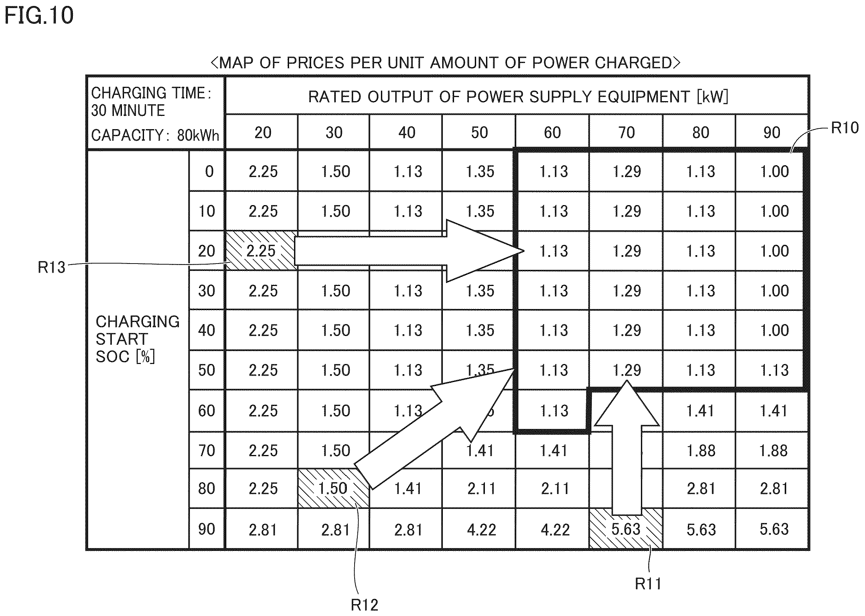

Fig. 10 is a diagram showing an actual range and a target range identified in the Fig. 8 map of prices per unit amount of power charged. For example, ECU 50 identifies as a target range a region R10 indicating a lower price per unit amount of power charged than a predetermined first threshold value (e.g., of 1.30). When there are two or more regions indicating a lower price per unit amount of power charged than the first threshold value, ECU 50 may identify the largest area (or range) as the target range. This method helps setting a significantly reliable target range. The area may be represented in size by the number of segments. For example, the region R10 includes 25 segments. Each segment included in the region R10 indicates a lower price per unit amount of power charged than the first threshold value.

ECU 50 identifies an actual range based on the rated output of the equipment of interest used to electrically charge the battery and the SOC that the battery has when electrically charging the battery starts. For example, in S12 of Fig. 4, when battery 11 is charged by power supply equipment under the condition that when electrically charging battery 11 starts the battery has an SOC of 90% or more and less than 100% and the equipment of interest has a rated output of 70 kW or more and less than 80 kW, ECU 50 identifies a segment R11 as the actual range in S16 of Fig. 4. In S12 of Fig. 4, when battery 11 is charged by power supply equipment under the condition that when electrically charging battery 11 starts the battery has an SOC of 80% or more and less than 90% and the equipment of interest has a rated output of 30 kW or more and less than 40 kW, ECU 50 identifies a segment R12 as the actual range in S16 of Fig. 4. In S12 of Fig. 4, when battery 11 is charged by power supply equipment under the condition that when electrically charging battery 11 starts the battery has an SOC of 20% or more and less than 30% and the equipment of interest has a rated output of 20 kW or more and less than 30 kW, ECU 50 identifies a segment R13 as the actual range in S16 of Fig. 4. When any of the segments R11 to R13 outside the target range (the region R10) is identified as an actual range, ECU 50 determines that the actual range is not included in the target range (NO in S17), and the ECU proceeds to S19.

ECU 50 may identify a rectangular target range in S16 of Fig. 4. For example, the region R10 having a segment of "row, column: 60, 60" removed therefrom may be identified as a target range. A rectangular target range can be represented by upper and lower limit values for the SOC that the battery has when electrically charging the battery starts and upper and lower limit values for the rated output of the power supply equipment. For example, the region R10 having the segment of "row, column: 60, 60" removed therefrom can be represented as a region for which when electrically charging the battery by power supply equipment starts the battery has an SOC of "0% or more and less than 50%" and the power supply equipment has a rated output of "60 kW or more and less than 100 kW".

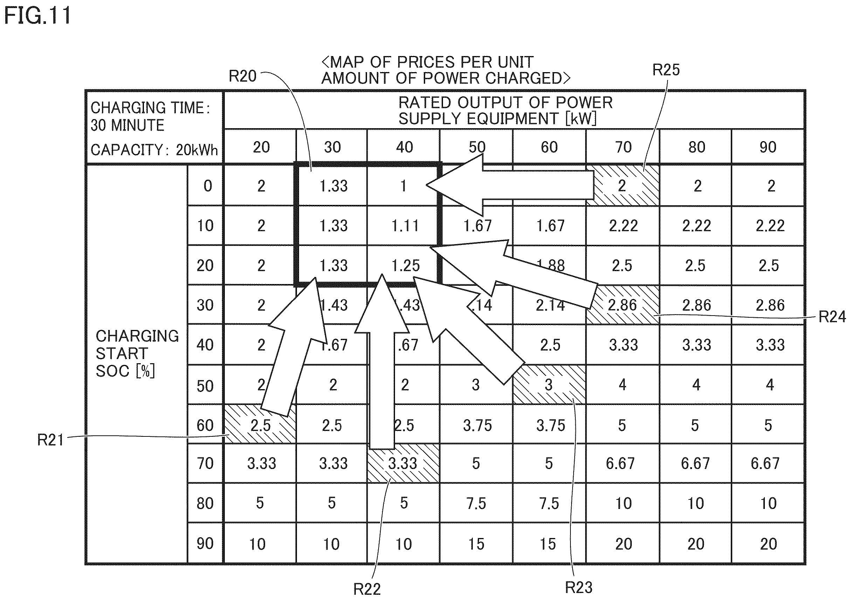

Fig. 11 is a diagram showing an actual range and a target range identified in the Fig. 9 map of prices per unit amount of power charged. For example, ECU 50 identifies as the target range a region R20 indicating a lower price per unit amount of power charged than a predetermined second threshold value (e.g., of 1.40). When there are two or more regions indicating a lower price per unit amount of power charged than the second threshold value, ECU 50 may identify the largest area (or range) as the target range. For example, the region R20 includes six segments. Each segment included in the region R20 indicates a lower price per unit amount of power charged than the second threshold value. Examples of the actual range identified in this map of prices per unit amount of power charged include segments R21, R22, R23, R24, and R25 in Fig. 11. When any of the segments R21 to R25 outside the target range (or the region R20) is identified as an actual range, ECU 50 determines that the actual range is not included in the target range (NO in S17), and the ECU proceeds to S19.

In S16 of Fig. 4, an actual range is identified according to a condition of the electrically charging the battery as performed. The condition of the electrically charging the battery as performed for example includes the rated output of the equipment of interest and the SOC that the battery has when electrically charging the battery starts. A segment in the target range may also be identified as an actual range. When a segment in the target range is identified as an actual range, ECU 50 determines that the actual range is included in the target range (YES in S17), and the ECU proceeds to S18.

In S18, ECU 50 notifies the user terminal of information (first charging information) about a price per unit amount of power charged to the battery in S12. The price per unit amount of power charged to the battery in S12 is, for example, a price per unit amount of power charged that is indicated by the actual range identified in S16. The user terminal that receives the notification may be HMI 80, mobile terminal 30, or both. The information about the price per unit amount of power charged that the user terminal is notified of in S18 for example includes at least one of the price per unit amount of power charged and a result of a determination indicating that the price per unit amount of power charged is lower than the reference price per unit amount of power charged. The user terminal receives the notification and displays the information that the user terminal is notified of (i.e., the first charging information) to the user. When the notification in S18 is performed, the processing flow F1 ends.

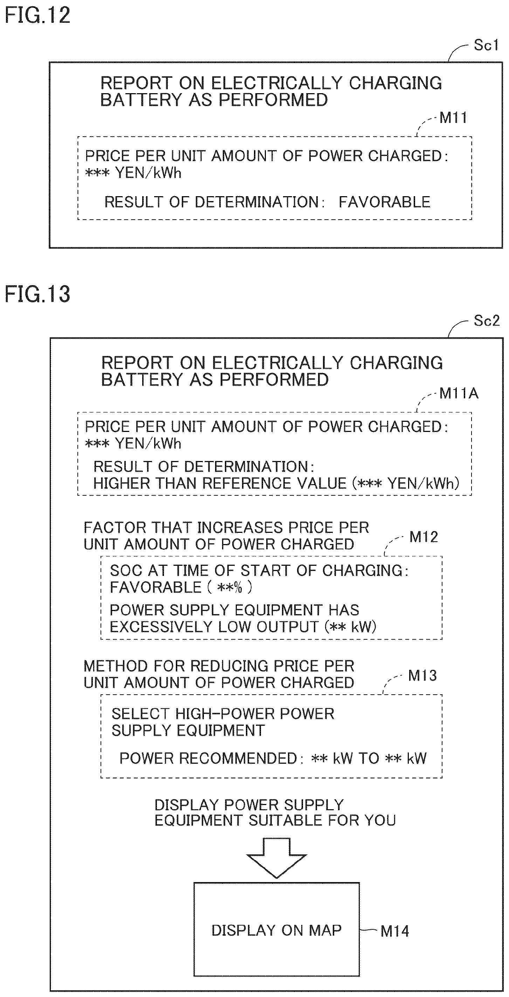

Fig. 12 shows an example of a screen displayed by the user terminal when it receives the notification issued in S18 of Fig. 4. The user terminal may display a screen Sc1 shown in Fig. 12, for example. The screen Sc1 includes an information section M11. The information section M11 indicates the price per unit amount of power charged to the battery in S12 of Fig. 4, and a result of a determination indicating that the price per unit amount of power charged is favorable (a favorable determination). The favorable determination means that the price per unit amount of power charged to the battery is lower than the reference price per unit amount of power charged.

In S19, ECU 50 notifies the user terminal of information (the first charging information) about the price per unit amount of power charged to the battery in S12 (e.g., the price per unit amount of power charged that the actual range identified in S16 indicates). The user terminal that receives the notification may be HMI 80, mobile terminal 30, or both. The information about the price per unit amount of power charged that the user terminal is notified of in S19 for example indicates at least one of: the price per unit amount of power charged; a result of a determination indicating that the price per unit amount of power charged is higher than the reference price per unit amount of power charged; a factor that increases the price per unit amount of power charged, and a method for reducing the price per unit amount of power charged.

In S19, ECU 50 identifies a factor that increases the price per unit amount of power charged and a method for reducing the price per unit amount of power charged, for example based on the map of prices per unit amount of power charged as updated in S15 and the actual and target ranges identified in S16. Specifically, in order to identify the factor and the method, ECU 50 determines whether a requirement for a charging condition for an SOC that the battery has when electrically charging the battery starts in S12 to fall within a target range (a requirement for the second indicator) is satisfied. Hereinafter, this determination will be referred to as "determination for the second indicator". For example, for the region R10 shown in Fig. 10, the battery having an SOC of 0% or more and less than 70% when electrically charging the battery starts corresponds to the requirement for the second indicator. The battery having the SOC of 0% or more and less than 70% when electrically charging the battery starts allows the charging condition to enter the region R10. For the region R20 shown in Fig. 11, the battery having an SOC of 0% or more and less than 30% when electrically charging the battery starts corresponds to the requirement for the second indicator.

When the determination for the second indicator indicates that the SOC that the battery has when electrically charging the battery in S12 starts fails to satisfy the requirement for the second indicator, ECU 50 determines whether a requirement for a charging condition for the rated output of the equipment of interest used to electrically charge the battery in S12 to fall within the target range (a requirement for the first indicator) is satisfied. Hereinafter, this determination will be referred to as "determination for the first indicator". For example, for the region R10 shown in Fig. 10, equipment of interest having a rated output of 60 kW or more and less than 100 kW corresponds to the requirement for the first indicator. The equipment of interest having the rated output of 60 kW or more and less than 100 kW allows the charging condition to enter the region R10. For the region R20 shown in Fig. 11, equipment of interest having a rated output of 30 kW or more and less than 50 kW corresponds to the requirement for the first indicator.

Note that the step of S19 is performed when an actual range is not included in a target range. Therefore, a determination for the second indicator indicating that the requirement therefor is satisfied means that the equipment of interest used to electrically charge the battery in S12 does not have a rated output satisfying the requirement for the first indicator.

When a determination for the second indicator indicates that the requirement therefor is satisfied, ECU 50 determines that changing the power supply equipment that is used to charge battery 11 so that the charging condition falls within the target range is the method for reducing the price per unit amount of power charged. For example, for the Fig. 10 map of prices per unit amount of power charged, when the segment R13 is the actual range, changing the power supply equipment to power supply equipment having a rated output of 60 kW or more and less than 100 kW as indicated by an arrow in Fig. 10 allows the charging condition to fall within the target range. For the Fig. 11 map of prices per unit amount of power charged, when the segment R25 is the actual range, changing the power supply equipment to power supply equipment having a rated output of 30 kW or more and less than 50 kW as indicated by an arrow in Fig. 11 allows the charging condition to fall within the target range.

When a determination for the second indicator indicates that the requirement therefor is unsatisfied and a determination for the first indicator indicates that the requirement therefor is satisfied, ECU 50 determines that changing an SOC that the battery has when electrically charging the battery starts so that the charging condition falls within the target range is the method for reducing the price per unit amount of power charged. For example, for the Fig. 10 map of prices per unit amount of power charged, when the segment R11 is the actual range, starting to electrically charge the battery when it has an SOC of 0% or more and less than 60% as indicated by an arrow in Fig. 10 allows the charging condition to fall within the target range. For the Fig. 11 map of prices per unit amount of power charged, when the segment R22 is the actual range, starting to electrically charge the battery when it has an SOC of 0% or more and less than 30% as indicated by an arrow in Fig. 11 allows the charging condition to fall within the target range.

When the Fig. 10 map of prices per unit amount of power charged has the segment R12 as the actual range or when the Fig. 11 map of prices per unit amount of power charged has any of the segments R21, R23 and R24 as the actual range, the determination for the first indicator indicates that the requirement therefor is unsatisfied and so does the determination for the second indicator. In such a case, ECU 50 determines that changing the power supply equipment to power supply equipment having a rated output allowing the charging condition to fall within the target range, and also starting to electrically charge the battery by the replacement power supply equipment when the battery has an SOC allowing the charging condition to fall within the target range, is the method for reducing the price per unit amount of power charged (see an arrow in Fig. 10 or Fig. 11).

When the notification in S19 is performed, the processing flow F1 ends. The user terminal receives the notification made in S19 and displays the information that the user terminal is notified of (i.e., the first charging information) to the user.

Fig. 13 shows a first screen displayed by the user terminal when it receives the notification made in S19 of Fig. 4. The user terminal may display a screen Sc2 shown in Fig. 13, for example. The screen Sc2 includes an information section M11A, an information section M12, an information section M13, and an operation section M14. The information section M11A indicates the price per unit amount of power charged to the battery in S12 of Fig. 4, and a result of a determination indicating that the price per unit amount of power charged is unfavorable (an unfavorable determination). The unfavorable determination means that the price per unit amount of power charged to the battery is higher than the reference price per unit amount of power charged. The information section M12 indicates a factor that increases the price per unit amount of power charged, as identified by ECU 50. The information section M13 indicates a method for reducing the price per unit amount of power charged, as identified by ECU 50.

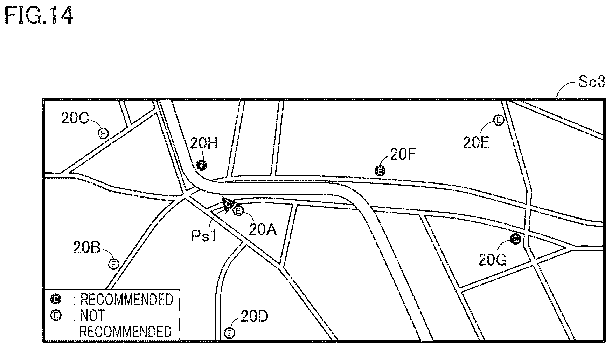

In S19 of Fig. 4, when a determination for the second indicator indicates that the requirement therefor is satisfied, then, for example, the touch panel display of the user terminal displays the information sections M12 and M13 and the operation section M14 shown in Fig. 13. The information section M12 indicates the rated output of the equipment of interest used to electrically charge the battery in S12 of Fig. 4, and the SOC that the battery has when electrically charging the battery in the step starts, and the information section M12 also indicates that the factor that increases the price per unit amount of power charged lies in the rated output of the power supply equipment. The information section M13 indicates the requirement for the first indicator, and together therewith, a message to encourage selecting power supply equipment satisfying the requirement for the first indicator. When the user operates the operation section M14, the user terminal displays on a map one or more units of power supply equipment satisfying the requirement for the first indicator, based on information received from ECU 50, while distinguishing power supply equipment failing to satisfy the requirement for the first indicator. Fig. 14 shows an example of a screen displayed by the user terminal in response to a user operation performed on the screen shown in Fig. 13 (at the operation section M14).

Fig. 14 shows a screen Sc3 indicating EVSEs 20A to 20H on a map. A position Ps1 indicates the current position of vehicle 10. The screen Sc3 shows a map around vehicle 10 (e.g., a range within a predetermined distance from the current position of vehicle 10). The user terminal may obtain map information (including positional information of power supply equipment) from NAVI 70. In the screen Sc3, EVSE 20A is the equipment of interest used to electrically charge the battery in S12 of Fig. 4. EVSEs 20A to 20E are each power supply equipment that does not satisfy the requirement for the first indicator. EVSEs 20F to 20H are each power supply equipment that satisfies the requirement for the first indicator. The user terminal displays EVSEs 20A to 20E and EVSEs 20F to 20H in an identifiable manner. In the example shown in Fig. 14, both are indicated by different marks. The screen Sc3 indicates on the map that, of EVSEs 20A to 20H, EVSEs 20F to 20H are recommended power supply equipment.

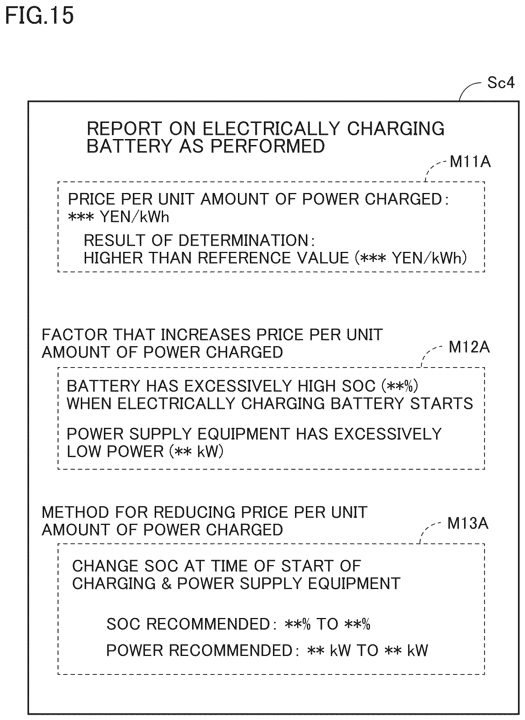

Fig. 15 shows a second screen displayed by the user terminal when it receives the notification made in S19 of Fig. 4. In S19 of Fig. 4, when the determination for the first indicator indicates that the requirement therefor is unsatisfied and so does the determination for the second indicator, the user terminal may display a screen Sc4 shown in Fig. 15, for example. The screen Sc4 includes the information section M11A, an information section M12A, and an information section M13A. The information section M12A indicates the rated output of the equipment of interest used to electrically charge the battery in S12 of Fig. 4, and the SOC that the battery has when electrically charging the battery in S12 starts, and the information section M12A also indicates that a factor that increases the price per unit amount of power charged lies in both the rated output of the power supply equipment and the SOC that the battery has when electrically charging the battery starts. The information section M13A indicates the requirements for the first and second indicators, and together therewith, a message to encourage the user to use power supply equipment satisfying the requirement for the first indicator to start electrically charging battery 11 when it has an SOC satisfying the requirement for the second indicator.

According to the processing flow F1 shown in Fig. 4, whenever the battery is electrically charged for a predetermined period of time (e.g., of 30 minutes) (YES in S13), the user terminal is notified (S18 or S19). Such notification can encourage the user to change the user's action to improve economy of daily charging (or habitual charging). Note that how often the notification is made can be changed as appropriate. For example, ECU 50 may issue the notification whenever one month elapses. The user terminal may thus receive the notification and display in vehicle 10's map of prices per unit amount of power charged how many times an actual range fails to enter a target range or a ratio of the actual range entering the target range.

In the present embodiment, server 100 shown in Fig. 1 accepts a reservation for EVSE. The user terminal (e.g., at least one of HMI 80 and mobile terminal 30) of vehicle 10 is configured to be capable of reserving EVSE by communicating with server 100. When a user reserves one of the plurality of EVSEs that the power supply system comprises, server 100 permits only the user who has reserved the EVSE to use the reserved EVSE. For example, the user is permitted to use the EVSE through user authentication between the user terminal used to reserve the EVSE and server 100. For making a reservation for EVSE, an effective period is determined for the reservation (hereinafter referred to as a "reservation period"). The reservation for the EVSE is only valid for the reservation period. The user terminal transmits identification information of EVSE and information indicating a reservation period to server 100 to request server 100 to reserve the EVSE. When server 100 accepts the request, a reservation for the EVSE is established.

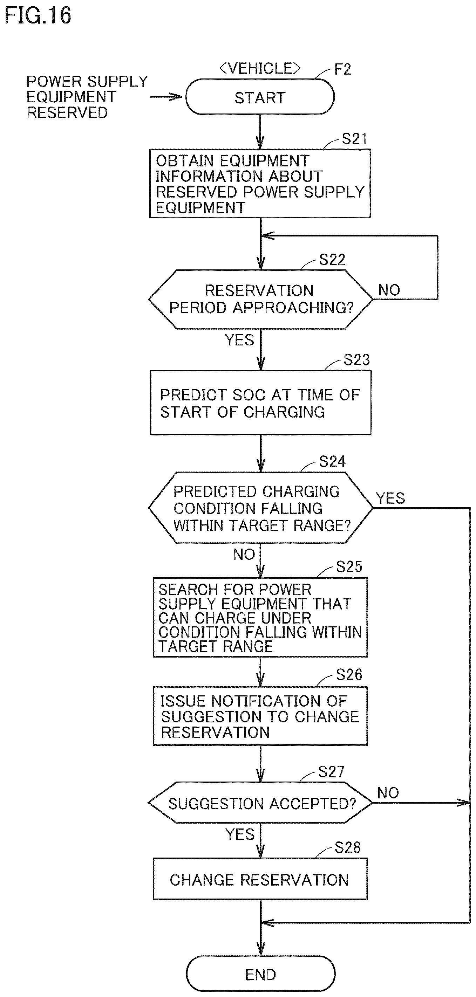

Once the EVSE has been reserved through the user terminal of vehicle 10, ECU 50 executes a processing flow F2 shown in Fig. 16. Fig. 16 is a flowchart of a second notification method according to the present embodiment.

In the processing flow F2, ECU 50 in S21 obtains equipment information about the reserved EVSE from server 100 that manages the reserved EVSE. The equipment information includes specification information (e.g., a rated output) and fee information (e.g., a unit price to be billed) of the reserved EVSE. Subsequently, in S22, ECU 50 determines whether the reservation period is approaching. For example, ECU 50 determines whether a time earlier by a predetermined period of time than a time at which the reservation period starts is reached. While it is determined that the reservation period is not approaching (NO in S22), the determination in S22 is repeated.

When it is determined that the reservation period is approaching (YES in S22), ECU 50 in S23 predicts an SOC that battery 11 will have when vehicle 10 arrives at the reserved EVSE, based for example on the SOC that battery 11 currently has and an amount of power consumed (more specifically, an amount of power consumed by vehicle 10 before vehicle 10 arrives at the reserved EVSE). ECU 50 may use at least one of the distance between the reserved EVSE and vehicle 10, road information (traffic congestion, slope, etc.), and temperature to predict the amount of power consumed. When battery 11 is electrically charged at the reserved EVSE, the SOC predicted in S23 is considered to be an SOC that the battery has when electrically charging the battery starts.

Subsequently, in S24, ECU 50 determines whether a predicted charging condition falls within a target range in a map of prices per unit amount of power charged. The predicted charging condition includes the rated output of the reserved EVSE, and the SOC that the battery has when electrically charging the battery starts, as predicted in S23. The target range in the map of prices per unit amount of power charged is identified similarly as done in S16 of Fig. 4. For example, when vehicle 10 has the Fig. 11 map of prices per unit amount of power charged, a decision of YES is made in S24 when the reserved EVSE has a rated output of 30 kW or more and less than 50 kW and the battery is predicted in S23 to have an SOC of 0% or more and less than 30% when electrically charging the battery starts, otherwise, a decision of NO is made in S24. When the decision of YES is made in S24, the processing flow F2 ends.

In contrast, when the decision of NO is made in S24, ECU 50 in S25 searches for EVSE capable of electrically charging battery 11 under a condition falling within the target range set in the map of prices per unit amount of power charged. ECU 50 may obtain a charging condition of candidate EVSE pursuant to S21 and S23. Subsequently, in S26, ECU 50 notifies the user terminal of a suggestion to change the reservation. Through S26, ECU 50 may notify the user terminal of information about the currently reserved EVSE and information about EVSE found through the search conducted in S25. The information about the currently reserved EVSE for example includes at least one of identification information, positional information, a rated output, a unit price to be billed, an SOC that the battery has when electrically charging the battery starts, and a price per unit amount of power charged. The information about the EVSE found through the search conducted in S25 for example includes at least one of identification information, positional information, a rated output, a unit price to be billed, an SOC that the battery has when electrically charging the battery starts, and a price per unit amount of power charged. ECU 50 may obtain each EVSE's price per unit amount of power charged, based on the map of prices per unit amount of power charged that vehicle 10 has. Subsequently, in S27, ECU 50 determines whether the user has accepted the suggestion. When the user accepts the suggestion made in S26 (YES in S27), ECU 50 in S28 requests server 100 to change the reservation. Specifically, ECU 50 requests server 100 to cancel the current reservation and make a new reservation for the EVSE found through the search conducted in S25. The EVSE found through the search conducted in S25 corresponds to power supply equipment satisfying the requirements for the first and second indicators in the map of prices per unit amount of power charged. When the user does not accept the suggestion made in S26 (NO in S27), the processing flow F2 ends without performing S28.

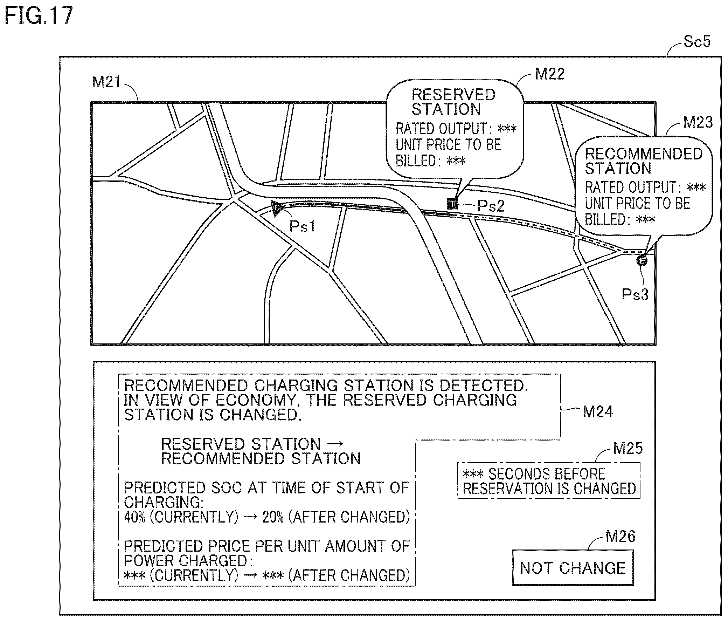

Hereinafter, the steps of S26 and S27 will be described with reference to Fig. 17. Fig. 17 shows an example of a screen displayed by the user terminal when it receives the notification issued in S26 of Fig. 16.

In response to the notification issued in S26 of Fig. 16, the touch panel display of the user terminal may display a screen Sc5 shown in Fig. 17. The screen Sc5 includes information sections M21 to M25 and an operation section M26. The information section M21 indicates on a map a current position Ps1 of vehicle 10, a position Ps2 of EVSE currently reserved (hereinafter also referred to as a "reserved station"), and a position Ps3 of EVSE found through the search conducted in S25 of Fig. 16 (hereinafter also referred to as a "recommended station"). The information section M22 indicates equipment information (e.g., a rated output and a unit price to be billed) about the reserved station. The information section M23 indicates equipment information (e.g., a rated output and a unit price to be billed) about the recommended station. Each EVSE has a time-based unit price as the unit price to be billed. The information section M24 indicates: a message to suggest changing the reservation from the reserved station to the recommended station; an SOC that the battery will have when electrically charging the battery starts at the reserved station and a price per unit amount of power charged which is set for the reserved station; and an SOC that the battery will have when electrically charging the battery starts at the recommended station and a price per unit amount of power charged which is set for the recommended station. The information section M25 indicates a period of time that remains before the reservation is changed. The operation section M26 receives an operation for the user to reject the suggestion.

The user terminal counts down the remaining period of time indicated in the information section M25. When the operation section M26 is not operated and the remaining period of time becomes zero (0), the user terminal requests ECU 50 to change the reservation. Upon receiving the request, ECU 50 makes a decision of YES in S27 and changes the reservation in S28. In contrast, when the operation section M26 is operated before the remaining period of time becomes zero (0), the user terminal notifies ECU 50 that the suggestion is not accepted. Upon receiving the notification, ECU 50 makes a decision of NO in S27. In that case, the reservation is not changed.

According to the above configuration, unless the user operates the operation section M26, the reservation is automatically changed at a predetermined timing (a timing corresponding to the remaining period of time indicated in the information section M25). This enhances convenience for the user. The user can easily cancel the reservation within a predetermined cancellation period of time. This is not exclusive, however, and the reservation may be changed in response to a user operation.

The notification method according to the above embodiment comprises each step shown in Figs. 4 and 16. In the present embodiment, each step is executed by one or more processors executing a program stored in one or more memories. It should be noted, however, that these steps may be executed without using software and instead be executed by hardware (or electronic circuitry) alone.

According to the above embodiment, a notification system comprises ECU 50 (a notification device) configured to notify a user terminal (HMI 80 and mobile terminal 30) of vehicle 10 of first charging information about electrically charging battery 11 (a power storage device) mounted in vehicle 10. ECU 50 obtains second charge information (a map of prices per unit amount of power charged) indicating a relationship between a first indicator, a second indicator, and a third indicator. The first indicator is an indicator for EVSE (power supply equipment) which supplies battery 11 with power. Specifically, the first indicator indicates the EVSE's rated output. The second indicator is an indicator for battery 11. Specifically, the second indicator indicates an SOC that the power storage device has when electrically charging the power storage device starts (an SOC that battery 11 has when electrically charging battery 11 starts). The third indicator indicates a first parameter which decreases as a rate of electrically charging battery 11 increases. Specifically, in the above embodiment, battery 11 is charged by time-based billing power supply equipment, and a price per unit amount of power charged is adopted as the first parameter. The higher the charging rate, the more inexpensive the price per unit amount of power charged. It should be noted, however, that the price per unit amount of power charged also varies depending on the unit price to be billed. The price per unit amount of power charged increases as the unit price to be billed (a time-based unit price) increases.

In the above embodiment, ECU 50 uses the second charging information to identify requirements for the first indicator and the second indicator allowing the first parameter to be smaller than a first reference value (see regions R10 and R20 in Figs. 10 and 11). Then, ECU 50 notifies the user terminal of the first charging information based on the identified requirements (S18 and S19 in Fig. 4 and S26 in Fig. 16). Such notification helps the user to determine a charging condition for battery 11 so as to achieve an appropriate charging rate. A charging rate may affect deterioration of an in-vehicle component. When a charging limitation and hence a reduced charging rate are applied, there is a possibility that an excessive load is imposed on the in-vehicle component (a charging-related component, in particular). Furthermore, the charging limitation is accompanied with generation of heat and thus tends to invite more energy consumption. Furthermore, a charging rate may also affect economy of charging.

In the above embodiment, after battery 11 is electrically charged, ECU 50 updates the second charging information using the rated output of the equipment of interest (EVSE), the SOC that battery 11 has when electrically charging the battery starts, and the amount of power input to battery 11 as it is electrically charged (S15 in Fig. 4). ECU 50 can thus easily obtain second charging information matching a characteristic of vehicle 10 and that of the user of the vehicle. Furthermore, when battery 11 is electrically charged without satisfying the requirement for at least one of the first indicator and the second indicator, ECU 50 notifies the user terminal of first charging information indicating the at least one unsatisfied requirement (S19 in Fig. 4). This helps the user to electrically charge battery 11 so as to satisfy the requirements for both the first indicator and the second indicator.

In the above embodiment, ECU 50 determines whether power supply equipment reserved via the user terminal satisfies the requirements for the first indicator and the second indicator, and when the reserved power supply equipment does not satisfy the requirement for at least one of the first indicator and the second indicator, the ECU notifies the user terminal of a suggestion to change the reservation (S26 in Fig. 16). Such a suggestion (see Fig. 17) helps the user to electrically charge the battery to satisfy the requirements for both the first indicator and the second indicator.

Based on the first charging information that the user terminal is notified of by ECU 50, the user terminal displays on a map one or more units of power supply equipment satisfying the requirement for the first indicator while distinguishing power supply equipment failing to satisfy the requirement for the first indicator (see Fig. 14). This helps the user to know power supply equipment that satisfies the requirement for the first indicator (a requirement necessary for a charging condition to fall within a target range).

It is not essential that ECU 50 execute both the processing flow F1 (Fig. 4) and the processing flow F2 (Fig. 16). For example, ECU 50 may be configured to execute only one of the processing flows F1 and F2.

The second charging information is not limited to the above-described map of prices per unit amount of power charged. Furthermore, the third indicator of the second charging information may not indicate the first parameter (e.g., a price per unit amount of power charged) and may instead indicate a second parameter which increases as a rate of electrically charging battery 11 increases. ECU 50 may identify in the second charging information requirements for the first indicator and the second indicator that allow the second parameter to be larger than a second reference value. The second parameter may be a charging rate.

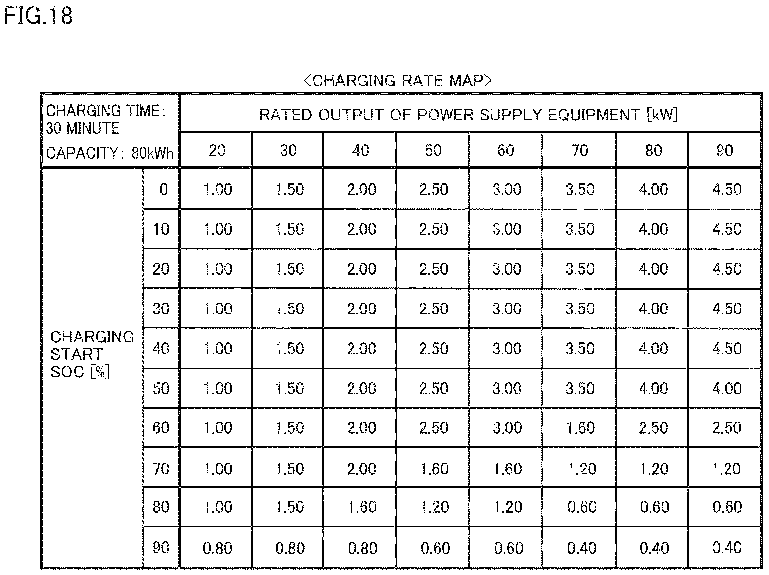

Fig. 18 shows a first example of the second charging information in which the second parameter is adopted as the third indicator. Vehicle 10 with battery 11 having a capacity of "80 kWh" may for example have a charging rate map (second charging information) shown in Fig. 18, rather than the Fig. 6 or Fig. 8 map of prices per unit amount of power charged, stored in storage device 52. The charging rate map includes regions identified by columns representing the first indicator (power supply equipment's rated output) and rows representing the second indicator (an SOC that the battery has when electrically charging the battery starts), similarly as the above-described map of prices per unit amount of power charged does. It should be noted, however, that in each region included in the charging rate map is set an average charging rate (an amount of power charged per unit time) obtained when power supply equipment having a rated output corresponding to the region is used to start electrically charging battery 11 having an SOC corresponding to the region and electrically charging battery 11 ends 30 minutes after doing so starts. The charging rate map shown in Fig. 18 indicates the lowest charging rate as"1", and, with reference to that region's charging rate, indicates other regions' charging rates.

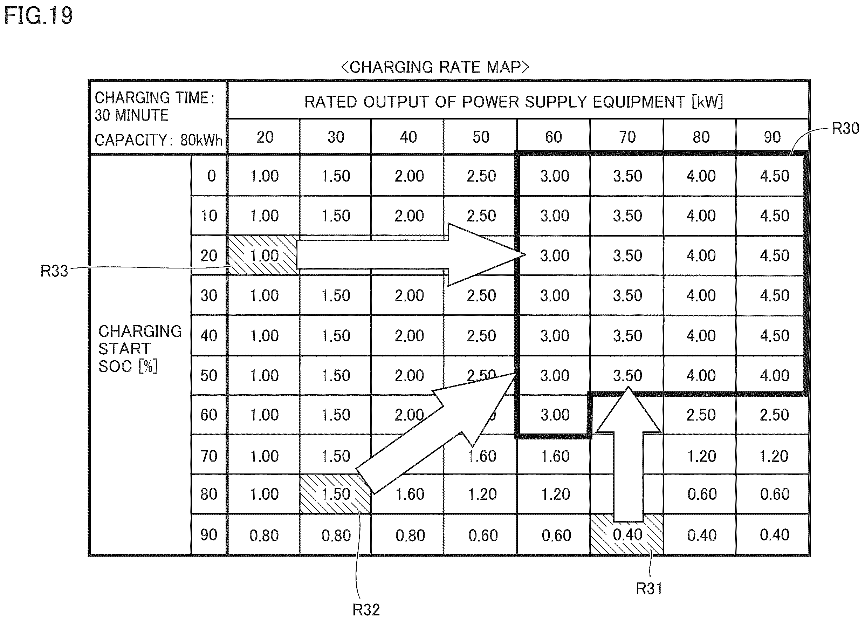

Fig. 19 shows an actual range and a target range identified in the charging rate map shown in Fig. 18. With reference to Fig. 4, ECU 50 in S16 for example identifies as a target range a region R30 indicating a charging rate higher than a predetermined third threshold value (e.g., of 2.8). Then, ECU 50 identifies an actual range based on the rated output of the equipment of interest used to electrically charge the battery and the SOC that the battery has when electrically charging the battery starts. When any of segments R31 to R33 outside the target range (the region R30) is identified as an actual range, a decision of NO is made in S17 of Fig. 4, and the control proceeds to S19. In S19, ECU 50 identifies what factor causes the reduced charging rate and what method increases the reduced charging rate, based for example on the charging rate map and the actual and target ranges identified in S16. ECU 50 may determine that causing a charging condition of the actual range (e.g., any of the segments R31 to R33) to fall within the target range, as indicated by an arrow in Fig. 19, is the method. In S19, ECU 50 notifies the user terminal of the identified factor, method, and the like.

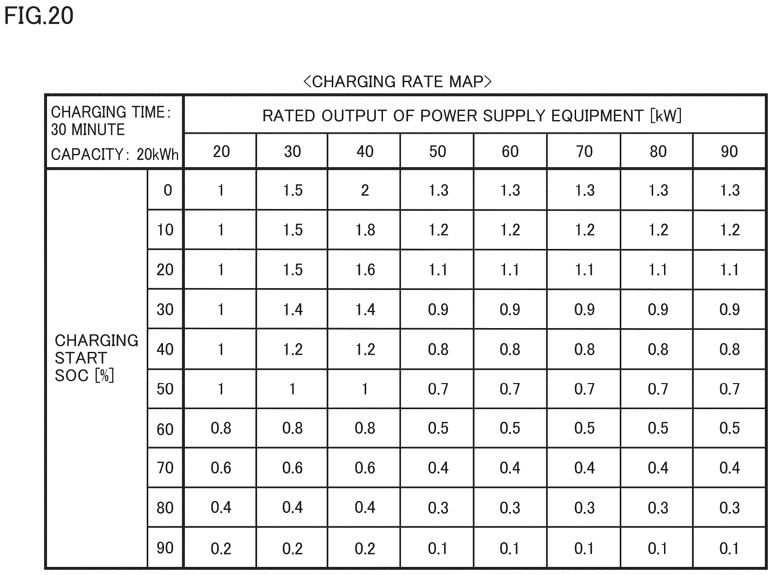

Fig. 20 shows a second example of the second charging information with the second parameter adopted as the third indicator. Vehicle 10 with battery 11 having a capacity of "20 kWh" may for example have a charging rate map (the second charging information) shown in Fig. 20, rather than the Fig. 7 or Fig. 9 map of prices per unit amount of power charged, stored in storage device 52.

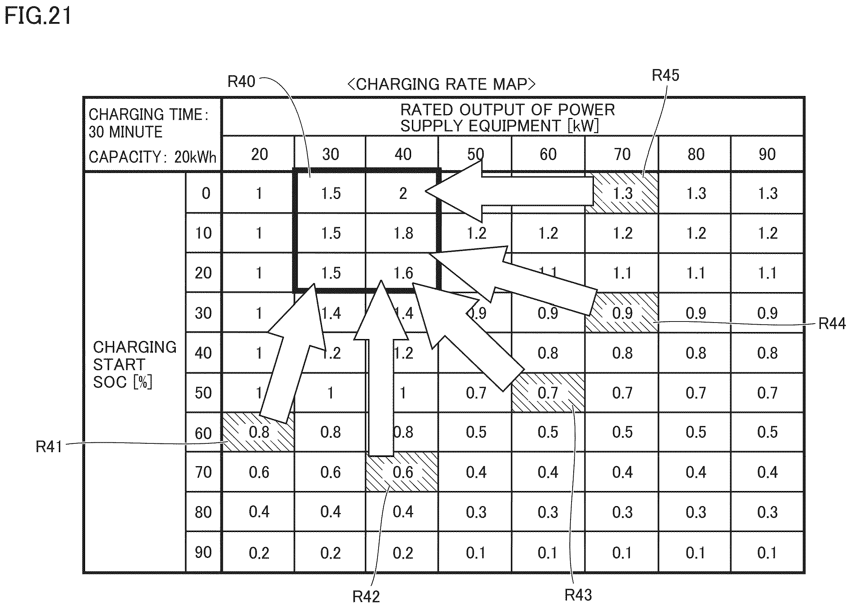

Fig. 21 shows an actual range and a target range identified in the charging rate map shown in Fig. 20. With reference to Fig. 4, ECU 50 in S16 for example identifies as a target range a region R40 indicating a charging rate higher than a predetermined fourth threshold value (e.g., of 1.45). Then, ECU 50 identifies an actual range based on the rated output of the equipment of interest used to electrically charge the battery and the SOC that the battery has when electrically charging the battery starts. When any of segments R41 to R45 outside the target range (the region R40) is identified as the actual range, a decision of NO is made in S17 of Fig. 4, and the control proceeds to S19. In S19, ECU 50 identifies what factor causes the reduced charging rate and what method increases the reduced charging rate, based for example on the charging rate map and the actual and target ranges identified in S16. ECU 50 may determine that causing a charging condition of the actual range (e.g., any of the segments R41 to R45) to fall within the target range, as indicated by an arrow in Fig. 21, is the method. In S19, ECU 50 notifies the user terminal of the identified factor, method, and the like.

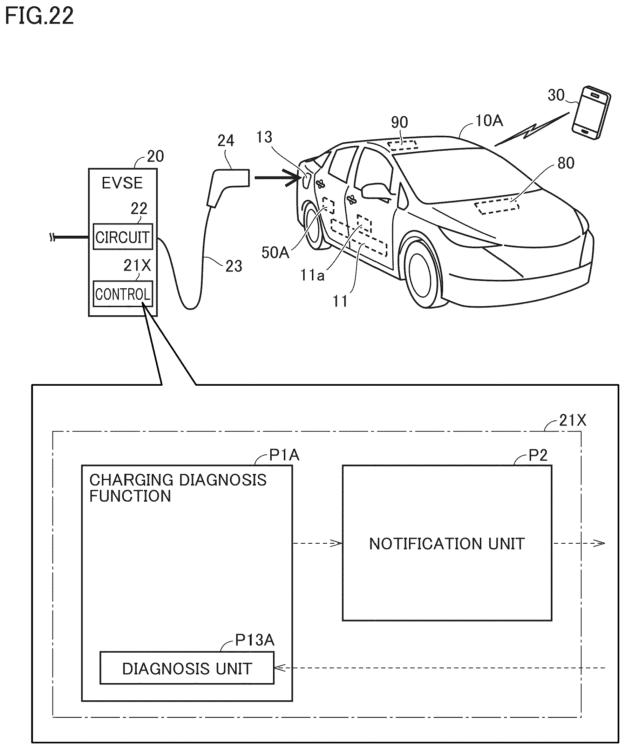

In the above embodiments or their variations, at least one of a charging diagnosis function and a notification function that ECU 50 has may be installed in power supply equipment. Fig. 22 shows an example of power supply equipment having the charging diagnosis function and the notification function.

EVSE 20 shown in Fig. 22 has the same configuration as EVSE 20A shown in Fig. 1 except that the former comprises a control unit 21X rather than control unit 21 (see Fig. 1). Control unit 21X comprises a storage device to store equipment information (e.g., specification information and fee information) of EVSE 20. Control unit 21X includes a unit P1A for the charging diagnosis function and notification unit P2. Unit P1A includes a diagnosis unit P13A. Diagnosis unit P13A has a function similar to that of diagnosis unit P13 shown in Fig. 3. It should be noted, however, that diagnosis unit P13A obtains the battery information of battery 11 and the second charging information from a vehicle 10A, and obtains the equipment information of EVSE 20 from the storage device. Notification unit P2 has a function similar to that of notification unit P2 shown in Fig. 3. Diagnosis unit P13A and notification unit P2 shown in Fig. 22 may each be implemented by a processor and a program stored in a storage device, or may be implemented by dedicated hardware (e.g., electronic circuitry).

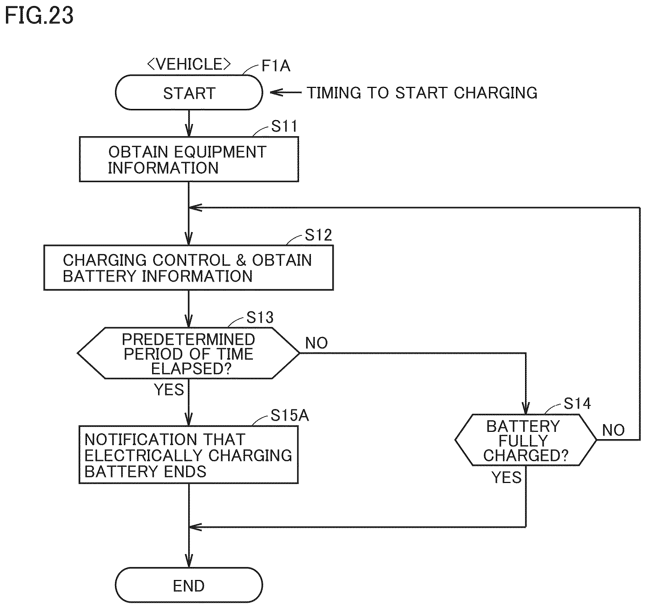

In an exemplary variation, the power supply system comprises a plurality of EVSEs each having a configuration similar to that of EVSE 20 shown in Fig. 22, for example. Vehicle 10A shown in Fig. 22 is similar in configuration to vehicle 10 shown in Fig. 2 except that the former comprises an ECU 50A rather than ECU 50. ECU 50A is functionally similar to ECU 50 shown in Fig. 1 except that the former dispenses with the charging diagnosis and notification functions shown in Fig. 3. Then, ECU 50A for example executes a processing flow F1A shown in Fig. 23 rather than the processing flow F1 shown in Fig. 4.

Fig. 23 is a flowchart of charging control according to an exemplary variation. The processing flow F1A is the same as the processing flow F1 except that the former excludes S15 to S19 (Fig. 4) and additionally includes S15A. In the processing flow F1A, S12 to S14 are repeated while battery 11 is electrically charged with power supplied to vehicle 10A from EVSE 20 shown in Fig. 22. When a predetermined period of time (e.g., of 30 minutes) elapses before battery 11 is fully charged (YES in S13), the control proceeds to S15A, and electrically charging battery 11 ends. In S15A, ECU 50A notifies control unit 21X that electrically charging the battery ends.

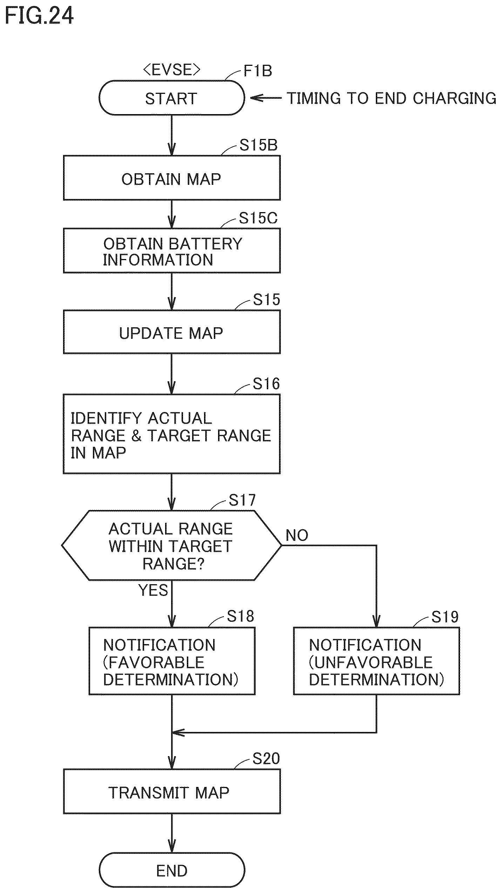

Upon receiving the notification made in S15A, control unit 21X starts a processing flow F1B shown in Fig. 24. Fig. 24 is a flowchart of a notification method according to an exemplary variation. The processing flow F1B is the same as the processing flow F1 shown in Fig. 4 except that the former excludes S11 to S14 (Fig. 4) and additionally includes S15B, S15C, and S20.

In the processing flow F1B, control unit 21X in S15B obtains the second charging information (e.g., a map of prices per unit amount of power charged or a charging rate map) of vehicle 10A from ECU 50A. Subsequently, in S15C, control unit 21X obtains battery information from ECU 50A. The battery information includes the SOC that the battery has when electrically charging the battery in S12 of Fig. 23 starts, and the amount of power charged to the battery in the step. The amount of power charged corresponds to an amount of power input to battery 11 for a period of time elapsing after electrically charging the battery starts before doing so ends. Subsequently, in S15, control unit 21X uses the battery information obtained in S15C and equipment information read from the storage device of control unit 21X to update the second charging information obtained in S15B. The equipment information for example includes the rated output of EVSE 20. The second charging information is updated in the same manner as S15 of Fig. 4. Subsequently, S18 or S19 is performed to notify the user terminal, and the control proceeds to S20. In S20, control unit 21X of EVSE 20 transmits to ECU 50A of vehicle 10A the second charging information updated in S15. ECU 50A stores the received second charging information in its own storage device.

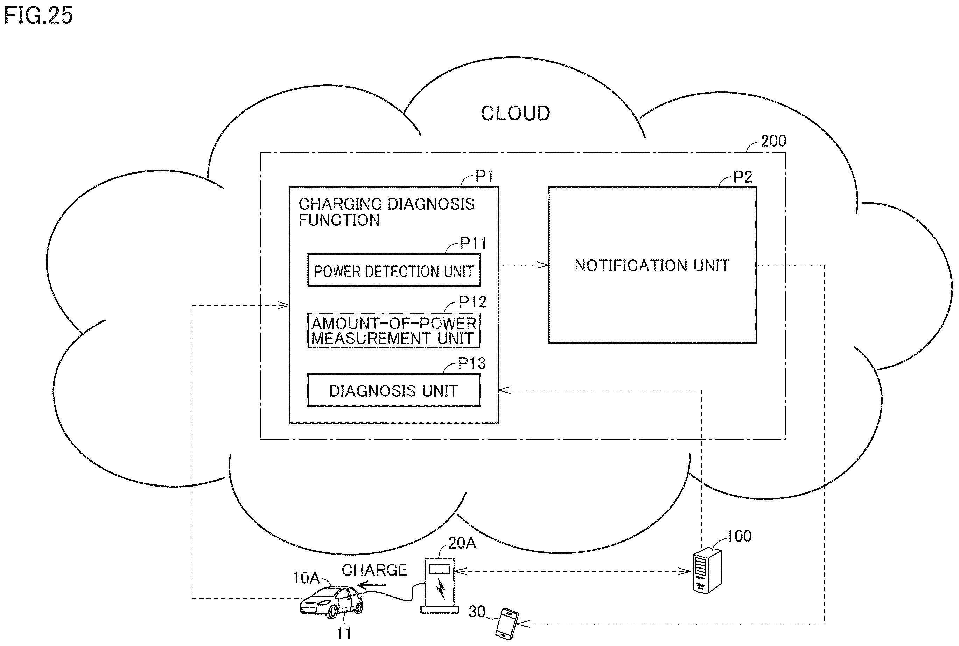

The charging diagnosis and notification functions shown in Fig. 3 or 22 may be implemented in a computing device on the cloud by cloud computing. Fig. 25 illustrates a cloud server having the charging diagnosis and notification functions shown in Fig. 3. A server 200 on the cloud shown in Fig. 25 includes unit P1 and notification unit P2 shown in Fig. 3. Server 200 is configured to be capable of communicating with vehicle 10A, a user terminal (mobile terminal 30) for vehicle 10A, and EVSE 20A that supplies vehicle 10A with power. Server 200 may be configured to be capable of communicating with server 100 that manages EVSE 20A in place of or in addition to EVSE 20A. Vehicle 10A may cooperate with server 200 to execute the processing flow F1 shown in Fig. 4.

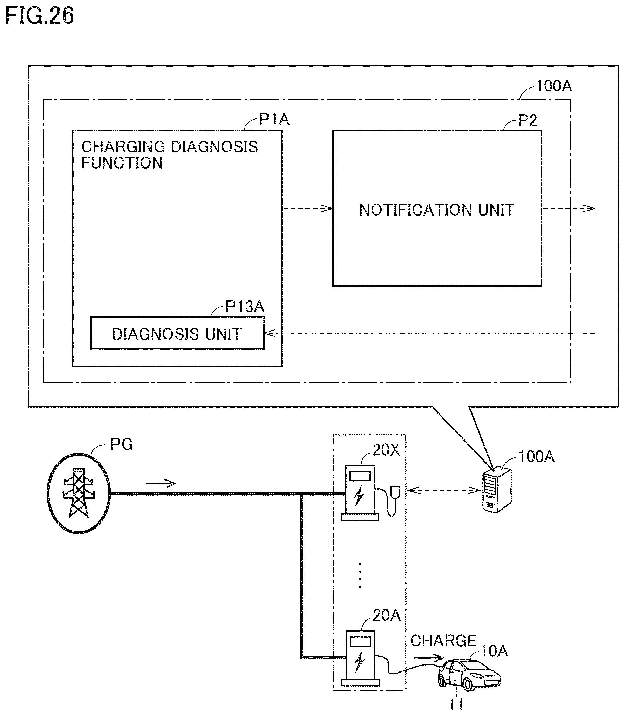

The charging diagnosis and notification functions shown in Fig. 22 may be implemented in a computing device that manages power supply equipment. Fig. 26 illustrates a server having the charging diagnosis and notification functions shown in Fig. 22. A server 100A shown in Fig. 26 includes unit P1A and notification unit P2 shown in Fig. 22. EVSE 20A having the configuration shown in Fig. 1 may cooperate with server 100A to execute the processing flow F1B shown in Fig. 24.

The second charging information may not have three indicators, and instead have four or more indicators. For example, external air temperature or the power storage device's temperature may be added as a fourth indicator.

The vehicle is not limited in configuration to the configuration described above (see Figs. 1 and 2). The vehicle is not limited to a four-wheeled passenger car and may be a bus or a truck. The vehicle may be configured to be autonomously drivable or may be provided with a flight function. The power supply equipment is not limited to the configuration described above, either (see Fig. 1). For example, Fig. 1 shows EVSE 20A only having a single charging cable 23. It should be noted, however, that the power supply equipment may have a plurality of charging cables. Such power supply equipment may be configured to be capable of simultaneously supplying power to a plurality of vehicles through a plurality of charging cables. The power supply equipment is not limited to DC (direct current) power supply equipment and may be AC (alternating current) power supply equipment. The power supply equipment may be power supply equipment which supplies power wirelessly. The vehicle and the power storage device may be configured to be wirelessly chargeable.

The variety of types of exemplary variations described above may be combined, as desired, and implemented.

While embodiments of the present disclosure have been described, it should be understood that the embodiments disclosed herein are illustrative and non-limiting in any respect. The scope of the present disclosure is defined by the terms of the claims, and intended to encompass any modification that falls within the meaning and scope equivalent to the terms of the claims.

## Claims

1. A vehicle (10) comprising a power storage device (11) and a controller (50),
the vehicle being configured to be capable of electrically charging the power storage device with power supplied from time-based billing power supply equipment (20A),
the controller being configured to
calculate a price per unit amount based on (i) equipment information about the power supply equipment and (ii) information on the power storage device, the price per unit amount indicating a charging fee per unit amount of power charged, and
notify a user terminal (30, 80) of information about the price per unit amount.

2. The vehicle according to claim 1, wherein the information about the price per unit amount indicates at least one of (i) a factor that increases the price per unit amount and (ii) a method for reducing the price per unit amount.

3. The vehicle according to claim 1, wherein the equipment information indicates power output from the power supply equipment and a charging fee of the power supply equipment.

4. The vehicle according to any one of claims 1 to 3, wherein the information on the power storage device indicates a state of charge (SOC) and a capacity of the power storage device.

5. The vehicle according to claim 1, wherein the user terminal is an in-vehicle terminal (80) mounted in the vehicle or a mobile terminal (30) carried by a user of the vehicle.

6. The vehicle according to claim 1, wherein the controller is configured to:
obtain a map based on the equipment information and the information on the power storage device, the map representing a relationship between (i) a first indicator for the power supply equipment, (ii) a second indicator for the power storage device, and (iii) the price per unit amount;
identify, in the map,
an actual range indicating the first indicator and the second indicator applied in electrically charging the power storage device, and
a target range indicating the first indicator and the second indicator allowing the price per unit amount to be lower than a predetermined value; and
in response to the target range failing to include the actual range, notify the user terminal of at least one of a factor that increases the price per unit amount and a method for reducing the price per unit amount.

7. Time-based billing power supply equipment (20) comprising a controller (21X),
the controller being configured to:
obtain information on a power storage device (11) mounted in a vehicle (10A) from the vehicle;
calculate a price per unit amount based on (i) the information on the power storage device and (ii) equipment information about the power supply equipment, the price per unit amount indicating a charging fee per unit amount of power charged; and
notify a user terminal of information about the price per unit amount.

8. A notification system comprising a notification device (50, 21X, 100A, 200, P2) configured to notify a user terminal (30, 80) of a vehicle (10) of first charging information about electrically charging a power storage device (11) mounted in the vehicle,
the notification device being configured to:
obtain second charging information representing a relationship between a first indicator, a second indicator, and a third indicator; and
notify the user terminal of the first charging information based on the second charging information,
the first indicator being an indicator about power supply equipment that supplies the power storage device with power,
the second indicator being an indicator about the power storage device,
the third indicator indicating a parameter relating to a rate of electrically charging the power storage device.

9. The notification system according to claim 8, wherein
the first indicator indicates a rated output of power supply equipment that supplies the power storage device with power to electrically charge the power storage device, and
the second indicator indicates a state of charge (SOC) that the power storage device has when electrically charging the power storage device starts.

10. The notification system according to claim 9, wherein
the parameter relating to the rate of electrically charging the power storage device is a first parameter decreasing as the rate of electrically charging the power storage device increases, and
the notification device is configured to:
identify, based on the second charging information, requirements for the first indicator and the second indicator allowing the first parameter to be smaller than a first reference value; and
notify the user terminal of the first charging information based on the requirements.

11. The notification system according to claim 9, wherein
the parameter relating to the rate of electrically charging the power storage device is a second parameter increasing as the rate of electrically charging the power storage device increases, and
the notification device is configured to:
identify, based on the second charging information, requirements for the first indicator and the second indicator allowing the second parameter to be larger than a second reference value; and
notify the user terminal of the first charging information based on the requirements.

12. The notification system according to claim 10 or 11, wherein the notification device is configured to:
after power supply equipment (20, 20A) electrically charges the power storage device, update the second charging information using (i) a rated output of the power supply equipment, (ii) an SOC that the power storage device has when electrically charging the power storage device starts, and (iii) an amount of power input to the power storage device as the power storage device is electrically charged; and
when the power storage device is electrically charged without satisfying at least one of the requirements for the first indicator and the second indicator, notify the user terminal of the first charging information indicating the at least one unsatisfied requirement.

13. The notification system according to claim 10 or 11, wherein the notification device is configured to:
determine whether power supply equipment reserved via the user terminal satisfies the requirements for the first indicator and the second indicator; and
when the reserved power supply equipment fails to satisfy at least one of the requirements for the first indicator and the second indicator, notify the user terminal to suggest changing the reservation.

14. The notification system according to claim 10 or 11, further comprising the user terminal (30, 80), wherein
the user terminal is configured to display on a map, based on the first charging information of which the user terminal is notified, the one or more units of power supply equipment satisfying the requirement for the first indicator as being distinguished from the power supply equipment failing to satisfy the requirement for the first indicator.

15. A method for notifying a user terminal (30, 80) for a power storage device (11), comprising:
calculating, by a computing device (50, 21X, 100A, 200), a price per unit amount using (i) information about time-based billing power supply equipment (20, 20A) and (ii) information about the power storage device charged with power supplied from the power supply equipment, the price per unit amount indicating a charging fee per unit amount of power charged; and
notifying, by the computing device, the user terminal of information about the price per unit amount.
